# EUROPEAN PATENT APPLICATION

(11) **EP 4 697 830 A1**
(43) Date of publication of application: **18.02.2026**
(21) Application number: 24806453.7
(22) Date of filing: 10.05.2024
(51) Int. Cl.: H04W 72/0446, H04L 5/00

(54) **UPLINK TRANSMISSION METHOD AND COMMUNICATION APPARATUS**

(30) Priority: 12.05.2023 CN 202310541859
(71) Applicant: Huawei Technologies Co., Ltd., Shenzhen, Guangdong 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN); HOU, Hailong, Shenzhen, Guangdong 518129 (CN)
(74) Representative: Goddar, Heinz J.
(86) International application number: PCT/CN2024/092136
(87) International publication number: WO 2024/235101

(57) **Abstract**

An uplink transmission method and a communication apparatus are provided. In the method, a terminal device and a network device determine whether a first slot meets a first condition. If the first slot does not meet the first condition, the first slot can be used to transmit a multi-slot (Multi-slot) PUSCH/PUCCH, or if the first slot meets the first condition, the first slot cannot be used to transmit a multi-slot (Multi-slot) PUSCH/PUCCH. The first condition includes: A first symbol set of the first slot includes a non-SBFD symbol and an SBFD symbol, and the non-SBFD symbol includes at least one of a flexible symbol and an uplink symbol. The method can avoid a problem that transmission performance may deteriorate or normal communication may fail because a multi-slot PUSCH/PUCCH is transmitted across a non-SBFD symbol and an SBFD symbol in one slot.

## Description

This application claims priority to Chinese Patent Application No. 202310541859.2, filed with the China National Intellectual Property Administration on May 12, 2023 and entitled "UPLINK TRANSMISSION METHOD AND COMMUNICATION APPARATUS", which is incorporated herein by reference in its entirety.

### TECHNICAL FIELD

Embodiments of this application relate to the communication field, and more specifically, to an uplink transmission method and a communication apparatus.

### BACKGROUND

With rapid development of the 5th generation mobile communication technology new radio (new radio, NR), various communication requirements emerge. To meet requirements of emerging services, a subband full duplex (subband non-overlapping full duplex, SBFD) solution is proposed to improve uplink coverage of a time division duplex (time division duplex, TDD) system. Subband full duplex means that in the TDD system, a network device can implement both receiving and sending in one slot or on one orthogonal frequency division multiplexing (orthogonal frequency division multiplexing, OFDM) symbol by using different subbands for uplink transmission and downlink transmission.

Currently, both an SBFD symbol and a non-SBFD symbol (for example, an uplink symbol or a flexible symbol) may be allocated for transmission of a multi-slot (Multi-slot) uplink shared channel (physical uplink shared channel, PUSCH) or a multi-slot uplink control channel (physical uplink control channel, PUCCH). For example, the multi-slot PUSCH/PUCCH may be transmitted on an uplink subband of the SBFD symbol and an uplink symbol. However, if the allocated SBFD symbol and non-SBFD symbol are in one slot, transmitting the multi-slot PUSCH/PUCCH across the SBFD symbol and the non-SBFD symbol in the slot may cause transmission performance deterioration, and even cause a failure in normal communication.

### SUMMARY

Embodiments of this application provide an uplink transmission method and a communication apparatus, to avoid a problem that transmission performance may deteriorate or normal communication may fail because a multi-slot PUSCH or a multi-slot PUCCH is transmitted across a non-SBFD symbol and an SBFD symbol in one slot.

According to a first aspect, an uplink transmission method is provided. The method may be performed by a terminal device, or may be performed by a component (for example, a chip or a circuit) of a terminal device. This is not limited. For ease of description, the following uses an example in which the method is performed by a terminal device for description.

The method may include: The terminal device receives first signaling from a network device, where the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH. The terminal device determines the first slot set, where the first slot set is a set of N1 slots that start from the first reference slot and are closest to the first reference slot and that do not meet a first condition, and the first condition includes: a first symbol set of a first slot includes a non-subband full duplex SBFD symbol and an SBFD symbol, where the non-SBFD symbol includes at least one of a flexible symbol or an uplink symbol, the first slot is a slot traversed forward from the first reference slot, the first symbol set of the first slot is determined based on the third indication information and the fourth indication information, and the first symbol set includes L consecutive symbols. The terminal device sends the first signal to the network device on a first symbol set corresponding to each slot in the first slot set.

That the first slot meets the first condition may be understood as follows: If the first symbol set of the first slot includes an SBFD symbol and an uplink symbol, or the first symbol set of the first slot includes an SBFD symbol and a flexible symbol, or the first symbol set of the first slot includes an SBFD symbol, an uplink symbol, and a flexible symbol, it is considered that the first slot meets the first condition in all the foregoing three cases.

In the foregoing technical solution, the first condition is added, so that a slot that meets the first condition cannot be used to transmit a multi-slot PUSCH/PUCCH, thereby avoiding a problem that transmission performance may deteriorate or normal communication may fail because a multi-slot PUSCH/PUCCH is transmitted across a non-SBFD symbol and an SBFD symbol in one slot.

According to a second aspect, an uplink transmission method is provided. The method may be performed by a terminal device, or may be performed by a component (for example, a chip or a circuit) of a terminal device. This is not limited. For ease of description, the following uses an example in which the method is performed by a terminal device for description.

The method may include: The terminal device receives first signaling from a network device, where the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH. The terminal device determines the first slot set, where the first slot set is a set of slots in a second slot set other than a slot that meets a first condition, the second slot set includes N1 consecutive slots including the first reference slot and a subsequent slot, and the first condition includes: a first symbol set of a first slot includes a non-subband full duplex SBFD symbol and an SBFD symbol, where the non-SBFD symbol includes at least one of a flexible symbol or an uplink symbol, the first slot is a slot traversed forward from the first reference slot, the first symbol set of the first slot is determined based on the third indication information and the fourth information, and the first symbol set includes L consecutive symbols. The terminal device sends the first signal to the network device on a first symbol set corresponding to each slot in the first slot set.

It should be understood that the technical solution in the first aspect may be considered as a specific implementation of determining a slot set for multi-slot PUSCH/PUCCH transmission that is provided based on an existing available slot counting method. The technical solution in the second aspect may be considered as a specific implementation of determining a slot set for multi-slot PUSCH/PUCCH transmission that is provided based on an existing physical slot counting method.

For beneficial effects of the second aspect, refer to the description in the first aspect. Details are not described herein again.

In some implementations of the first aspect or the second aspect, the method further includes: The terminal device receives first information from the network device, where the first information indicates that simultaneous transmission on a non-SBFD symbol and an SBFD symbol in one slot is not supported.

It may be understood that, that the network device supports simultaneous transmission on a non-SBFD symbol and an SBFD symbol in one slot indicates that transmission of the first signal is not affected when the network device switches between a non-SBFD symbol and an SBFD symbol in one slot.

In the foregoing technical solution, when the network device indicates that simultaneous transmission on a non-SBFD symbol and an SBFD symbol in one slot is not supported, the terminal device determines, based on the first condition, that a slot that meets the first condition cannot be used to transmit a multi-slot PUSCH/PUCCH, thereby avoiding a problem that transmission performance may deteriorate or normal communication may fail because a multi-slot PUSCH/PUCCH is transmitted across a non-SBFD symbol and an SBFD symbol in one slot.

In some implementations of the first aspect or the second aspect, the method further includes: The terminal device receives second information from the network device, where the second information includes a first parameter, a second parameter, and a third parameter, the first parameter indicates whether the network device needs to switch an antenna panel, the second parameter indicates whether the network device needs to switch a filter, and the third parameter indicates whether the network device indicates the terminal device to perform TA adjustment. When an operation indicated by at least one of the first parameter, the second parameter, and the third parameter needs to be performed, the terminal device determines that the network device does not support simultaneous transmission on a non-SBFD symbol and an SBFD symbol in one slot.

It may be understood that, when the network device switches between a non-SBFD symbol and an SBFD symbol in one slot, if transmission of the first signal is not affected, the network device does not perform an operation that affects transmission of the first signal. The operation includes but is not limited to an operation that the network device does not switch an antenna panel, an operation that the network device switches a filter, an operation that the network device indicates the terminal device to perform timing advance (timing advance, TA) adjustment, or the like.

In the foregoing technical solution, the network device implicitly indicates, to the terminal device based on whether to perform a related operation, whether simultaneous transmission on a non-SBFD symbol and an SBFD symbol in one slot is supported.

According to a third aspect, an uplink transmission method is provided. The method may be performed by a network device, or may be performed by a component (for example, a chip or a circuit) of a network device. This is not limited. For ease of description, the following uses an example in which the method is performed by a network device for description.

The method may include: The network device sends first signaling to a terminal device, where the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH. The network device determines the first slot set, where the first slot set is a set of N1 slots that start from the first reference slot and are closest to the first reference slot and that do not meet a first condition, and the first condition includes: a first symbol set of a first slot includes a non-subband full duplex SBFD symbol and an SBFD symbol, where the non-SBFD symbol includes at least one of a flexible symbol or an uplink symbol, the first slot is a slot traversed forward from the first reference slot, the first symbol set of the first slot is determined based on the third indication information and the fourth information, and the first symbol set includes L consecutive symbols. The network device receives the first signal from the terminal device on a first symbol set corresponding to each slot in the first slot set.

According to a fourth aspect, an uplink transmission method is provided. The method may be performed by a network device, or may be performed by a component (for example, a chip or a circuit) of a network device. This is not limited. For ease of description, the following uses an example in which the method is performed by a network device for description.

The method may include: The network device sends first signaling to a terminal device, where the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH. The network device determines the first slot set, where the first slot set is a set of slots in a second slot set other than a slot that meets a first condition, the second slot set includes N1 consecutive slots including the first reference slot and a subsequent slot, and the first condition includes: a first symbol set of a first slot includes a non-subband full duplex SBFD symbol and an SBFD symbol, where the non-SBFD symbol includes at least one of a flexible symbol or an uplink symbol, the first slot is a slot traversed forward from the first reference slot, the first symbol set of the first slot is determined based on the third indication information and the fourth information, and the first symbol set includes L consecutive symbols. The network device receives the first signal from the terminal device on a first symbol set corresponding to each slot in the first slot set.

It should be understood that the technical solution in the third aspect may be considered as a specific implementation of determining a slot set for multi-slot PUSCH/PUCCH transmission that is provided based on an existing available slot counting method. The technical solution in the fourth aspect may be considered as a specific implementation of determining a slot set for multi-slot PUSCH/PUCCH transmission that is provided based on an existing physical slot counting method.

For beneficial effects of the third aspect and the fourth aspect, refer to the descriptions in the first aspect. Details are not described herein again.

In some implementations of the third aspect or the fourth aspect, the method further includes: The network device sends first information to the terminal device, where the first information indicates that simultaneous transmission on a non-SBFD symbol and an SBFD symbol in one slot is not supported.

In some implementations of the third aspect or the fourth aspect, the method further includes: The network device sends second information to the terminal device, where the second information includes a first parameter, a second parameter, and a third parameter, the first parameter indicates whether the network device needs to switch an antenna panel, the second parameter indicates whether the network device needs to switch a filter, the third parameter indicates whether the network device indicates the terminal device to perform TA adjustment, and an operation indicated by at least one of the first parameter, the second parameter, and the third parameter needs to be performed.

According to a fifth aspect, an uplink transmission method is provided. The method may be performed by a terminal device, or may be performed by a component (for example, a chip or a circuit) of a terminal device. This is not limited. For ease of description, the following uses an example in which the method is performed by a terminal device for description.

The method may include: The terminal device receives first signaling from a network device, where the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH. The terminal device determines the first slot set, where the first slot set is a set of N1 slots that start from the first reference slot and are closest to the first reference slot and that do not meet a second condition, and the second condition includes: a symbol type of at least one symbol in a first symbol set of a first slot is different from a first symbol type, where the first symbol type is non-subband full duplex SBFD symbol or SBFD symbol, the non-SBFD symbol includes at least one of a flexible symbol or an uplink symbol, the first slot is a slot traversed forward from the first reference time unit, a first symbol set of any slot is determined based on the third indication information and the fourth indication information, and the first symbol set includes L consecutive symbols. The terminal device sends the first signal to the network device on a first symbol set corresponding to each slot in the first slot set.

That the first slot does not meet the second condition may be understood as follows: When the first symbol type is SBFD symbol, if all symbols in the first symbol set of the first slot are SBFD symbols, it is considered that the first slot does not meet the second condition. When the first symbol type is non-SBFD symbol, and all symbols in the first symbol set of the first slot are flexible symbols, or all symbols in the first symbol set of the first slot are uplink symbols, or some symbols in the first symbol set of the first slot are flexible symbols and all remaining symbols are uplink symbols, it is considered that the first slot does not meet the second condition in all the foregoing three cases.

In the foregoing technical solution, the second condition is added, so that a slot that meets the second condition cannot be used to transmit a multi-slot PUSCH/PUCCH, thereby avoiding a problem that transmission performance may deteriorate or normal communication may fail because a multi-slot PUSCH/PUCCH is transmitted across a non-SBFD symbol and an SBFD symbol in one slot.

According to a sixth aspect, an uplink transmission method is provided. The method may be performed by a terminal device, or may be performed by a component (for example, a chip or a circuit) of a terminal device. This is not limited. For ease of description, the following uses an example in which the method is performed by a terminal device for description.

The method may include: The terminal device receives first signaling from a network device, where the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH. The terminal device determines the first slot set, where the first slot set is a set of slots in a second slot set other than a slot that meets a second condition, the second slot set includes N1 consecutive slots including the first reference slot and a subsequent slot, and the second condition includes: a symbol type of at least one symbol in a first symbol set of a first slot is different from a first symbol type, where the first symbol type is non-subband full duplex SBFD symbol or SBFD symbol, the non-SBFD symbol includes at least one of a flexible symbol or an uplink symbol, the first slot is a slot traversed forward from the first reference time unit, a first symbol set of any slot is determined based on the third indication information and the fourth indication information, and the first symbol set includes L consecutive symbols. The terminal device sends the first signal to the network device on a first symbol set corresponding to each slot in the first slot set.

It should be understood that the technical solution in the fifth aspect may be considered as a specific implementation of determining a slot set for multi-slot PUSCH/PUCCH transmission that is provided based on an existing available slot counting method. The technical solution in the sixth aspect may be considered as a specific implementation of determining a slot set for multi-slot PUSCH/PUCCH transmission that is provided based on an existing physical slot counting method.

For beneficial effects of the sixth aspect, refer to the descriptions in the fifth aspect. Details are not described herein again.

According to a seventh aspect, an uplink transmission method is provided. The method may be performed by a network device, or may be performed by a component (for example, a chip or a circuit) of a network device. This is not limited. For ease of description, the following uses an example in which the method is performed by a network device for description.

The method includes: The network device sends first signaling to a terminal device, where the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH. The network device determines the first slot set, where the first slot set is a set of N1 slots that start from the first reference slot and are closest to the first reference slot and that do not meet a second condition, and the second condition includes: a symbol type of at least one symbol in a first symbol set of a first slot is different from a first symbol type, where the first symbol type is non-subband full duplex SBFD symbol or SBFD symbol, the non-SBFD symbol includes at least one of a flexible symbol or an uplink symbol, the first slot is a slot traversed forward from the first reference time unit, a first symbol set of any slot is determined based on the third indication information and the fourth indication information, and the first symbol set includes L consecutive symbols. The network device receives the first signal from the terminal device on a first symbol set corresponding to each slot in the first slot set.

According to an eighth aspect, an uplink transmission method is provided. The method may be performed by a network device, or may be performed by a component (for example, a chip or a circuit) of a network device. This is not limited. For ease of description, the following uses an example in which the method is performed by a network device for description.

The method includes: The network device sends first signaling to a terminal device, where the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH. The network device determines the first slot set, where the first slot set is a set of slots in a second slot set other than a slot that meets a second condition, the second slot set includes N1 consecutive slots including the first reference slot and a subsequent slot, and the second condition includes: a symbol type of at least one symbol in a first symbol set of a first slot is different from a first symbol type, where the first symbol type is non-subband full duplex SBFD symbol or SBFD symbol, the non-SBFD symbol includes at least one of a flexible symbol or an uplink symbol, the first slot is a slot traversed forward from the first reference time unit, a first symbol set of any slot is determined based on the third indication information and the fourth indication information, and the first symbol set includes L consecutive symbols. The network device receives the first signal from the terminal device on a first symbol set corresponding to each slot in the first slot set.

It should be understood that the technical solution in the seventh aspect may be considered as a specific implementation of determining a slot set for multi-slot PUSCH/PUCCH transmission that is provided based on an existing available slot counting method. The technical solution in the eighth aspect may be considered as a specific implementation of determining a slot set for multi-slot PUSCH/PUCCH transmission that is provided based on an existing physical slot counting method.

For beneficial effects of the seventh aspect and the eighth aspect, refer to the descriptions in the fifth aspect. Details are not described herein again.

In some implementations of any one of the fifth aspect to the eighth aspect, any symbol in a first symbol set of the first reference slot is a non-SBFD symbol, and the first symbol type is non-SBFD symbol; or any symbol in a first symbol set of the first reference slot is an SBFD symbol, and the first symbol type is SBFD symbol.

In some implementations of any one of the fifth aspect to the eighth aspect, when a first symbol set of the first reference slot includes a downlink symbol, the first symbol type is determined based on a second slot, where the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

In some implementations of any one of the fifth aspect to the eighth aspect, when a first symbol set of the first reference slot includes an SBFD symbol and a non-SBFD symbol, the first symbol type is determined based on a second slot, where the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

In some implementations of any one of the fifth aspect to the eighth aspect, the first signaling further includes the first symbol type.

In some implementations of any one of the fifth aspect to the eighth aspect, the first signaling further includes a first frequency range, and the first frequency range is a frequency range for sending the first signal; and if the first frequency range is not completely included in a frequency range of an uplink subband of an SBFD symbol, the first symbol type is non-SBFD symbol; or if the first frequency range is completely included in a frequency range of an uplink subband of an SBFD symbol, the first symbol type is SBFD symbol.

According to a ninth aspect, a downlink transmission method is provided. The method may be performed by a terminal device, or may be performed by a component (for example, a chip or a circuit) of a terminal device. This is not limited. For ease of description, the following uses an example in which the method is performed by a terminal device for description.

The method may include: The terminal device receives first signaling from a network device, where the first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical downlink shared channel PDSCH. The terminal device determines the first slot set, where the first slot set is a set of N1 slots that start from the first reference slot and are closest to the first reference slot and that do not meet a first condition, and the first condition includes: a first symbol set of a first slot includes a non-subband full duplex SBFD symbol and an SBFD symbol, where the non-SBFD symbol includes at least one of a flexible symbol or a downlink symbol, the first slot is a slot traversed forward from the first reference slot, the first symbol set of the first slot is determined based on the third indication information and the fourth indication information, and the first symbol set includes L consecutive symbols. The terminal device receives the first signal from the network device on a first symbol set corresponding to each slot in the first slot set.

That the first slot meets the first condition may be understood as follows: If the first symbol set of the first slot includes an SBFD symbol and a downlink symbol, or the first symbol set of the first slot includes an SBFD symbol and a flexible symbol, or the first symbol set of the first slot includes an SBFD symbol, a downlink symbol, and a flexible symbol, it is considered that the first slot meets the first condition in all the foregoing three cases.

In the foregoing technical solution, the first condition is added, so that a slot that meets the first condition cannot be used to transmit a multi-slot PDSCH, thereby avoiding a problem that transmission performance may deteriorate or normal communication may fail because a multi-slot PDSCH is transmitted across a non-SBFD symbol and an SBFD symbol in one slot.

According to a tenth aspect, a downlink transmission method is provided. The method may be performed by a terminal device, or may be performed by a component (for example, a chip or a circuit) of a terminal device. This is not limited. For ease of description, the following uses an example in which the method is performed by a terminal device for description.

The method may include: The terminal device receives first signaling from a network device, where the first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical downlink shared channel PDSCH. The terminal device determines the first slot set, where the first slot set is a set of slots in a second slot set other than a slot that meets a first condition, the second slot set includes N1 consecutive slots including the first reference slot and a subsequent slot, and the first condition includes: a first symbol set of a first slot includes a non-subband full duplex SBFD symbol and an SBFD symbol, where the non-SBFD symbol includes at least one of a flexible symbol or a downlink symbol, the first slot is a slot traversed forward from the first reference slot, the first symbol set of the first slot is determined based on the third indication information and the fourth indication information, and the first symbol set includes L consecutive symbols. The terminal device receives the first signal from the network device on a first symbol set corresponding to each slot in the first slot set.

It should be understood that the technical solution in the ninth aspect may be considered as a specific implementation of determining a slot set for multi-slot PDSCH transmission that is provided based on an existing available slot counting method. The technical solution in the tenth aspect may be considered as a specific implementation of determining a slot set for multi-slot PDSCH transmission that is provided based on an existing physical slot counting method.

For beneficial effects of the second aspect, refer to the description in the first aspect. Details are not described herein again.

In some implementations of the ninth aspect or the tenth aspect, the method further includes: The terminal device receives first information from the network device, where the first information indicates that simultaneous transmission on a non-SBFD symbol and an SBFD symbol in one slot is not supported.

It may be understood that, that the network device supports simultaneous transmission on a non-SBFD symbol and an SBFD symbol in one slot indicates that transmission of the first signal is not affected when the network device switches between a non-SBFD symbol and an SBFD symbol in one slot.

In the foregoing technical solution, when the network device indicates that simultaneous transmission on a non-SBFD symbol and an SBFD symbol in one slot is not supported, the terminal device determines, based on the first condition, that a slot that meets the first condition cannot be used to transmit a multi-slot PDSCH, thereby avoiding a problem that transmission performance may deteriorate or normal communication may fail because a multi-slot PDSCH is transmitted across a non-SBFD symbol and an SBFD symbol in one slot.

In some implementations of the ninth aspect or the tenth aspect, the method further includes: The terminal device receives second information from the network device, where the second information includes a first parameter, a second parameter, and a third parameter, the first parameter indicates whether the network device needs to switch an antenna panel, the second parameter indicates whether the network device needs to switch a filter, and the third parameter indicates whether the network device indicates the terminal device to perform TA adjustment. When an operation indicated by at least one of the first parameter, the second parameter, and the third parameter needs to be performed, the terminal device determines that the network device does not support simultaneous transmission on a non-SBFD symbol and an SBFD symbol in one slot.

It may be understood that, when the network device switches between a non-SBFD symbol and an SBFD symbol in one slot, if transmission of the first signal is not affected, the network device does not perform an operation that affects transmission of the first signal. The operation includes but is not limited to an operation that the network device does not switch an antenna panel, an operation that the network device switches a filter, an operation that the network device indicates the terminal device to perform TA adjustment, or the like.

It may be understood that, when the network device switches between a non-SBFD symbol and an SBFD symbol in one slot, if transmission of the first signal is not affected, the network device does not perform an operation that affects transmission of the first signal. The operation includes but is not limited to an operation that the network device does not switch an antenna panel, an operation that the network device switches a filter, an operation that the network device indicates the terminal device to perform timing advance (timing advance, TA) adjustment, or the like.

In the foregoing technical solution, the network device implicitly indicates, to the terminal device based on whether to perform a related operation, whether simultaneous transmission on a non-SBFD symbol and an SBFD symbol in one slot is supported.

According to an eleventh aspect, a downlink transmission method is provided. The method may be performed by a network device, or may be performed by a component (for example, a chip or a circuit) of a network device. This is not limited. For ease of description, the following uses an example in which the method is performed by a network device for description.

The method may include: The network device sends first signaling to a terminal device, where the first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical downlink shared channel PDSCH. The network device determines the first slot set, where the first slot set is a set of N1 slots that start from the first reference slot and are closest to the first reference slot and that do not meet a first condition, and the first condition includes: a first symbol set of a first slot includes a non-subband full duplex SBFD symbol and an SBFD symbol, where the non-SBFD symbol includes at least one of a flexible symbol or a downlink symbol, the first slot is a slot traversed forward from the first reference slot, the first symbol set of the first slot is determined based on the third indication information and the fourth information, and the first symbol set includes L consecutive symbols. The network device sends the first signal to the terminal device on a first symbol set corresponding to each slot in the first slot set.

According to a twelfth aspect, a downlink transmission method is provided. The method may be performed by a network device, or may be performed by a component (for example, a chip or a circuit) of a network device. This is not limited. For ease of description, the following uses an example in which the method is performed by a network device for description.

The method may include: The network device sends first signaling to a terminal device, where the first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical downlink shared channel PDSCH. The network device determines the first slot set, where the first slot set is a set of slots in a second slot set other than a slot that meets a first condition, the second slot set includes N1 consecutive slots including the first reference slot and a subsequent slot, and the first condition includes: a first symbol set of a first slot includes a non-subband full duplex SBFD symbol and an SBFD symbol, where the non-SBFD symbol includes at least one of a flexible symbol or a downlink symbol, the first slot is a slot traversed forward from the first reference slot, the first symbol set of the first slot is determined based on the third indication information and the fourth information, and the first symbol set includes L consecutive symbols. The network device sends the first signal to the terminal device on a first symbol set corresponding to each slot in the first slot set.

For beneficial effects of the eleventh aspect or the twelfth aspect, refer to the descriptions in the ninth aspect. Details are not described herein again.

In some implementations of the eleventh aspect or the twelfth aspect, the method further includes: The network device sends first information to the terminal device, where the first information indicates that simultaneous transmission on a non-SBFD symbol and an SBFD symbol in one slot is not supported.

In some implementations of the eleventh aspect or the twelfth aspect, the method further includes: The network device sends second information to the terminal device, where the second information includes a first parameter, a second parameter, and a third parameter, the first parameter indicates whether the network device needs to switch an antenna panel, the second parameter indicates whether the network device needs to switch a filter, the third parameter indicates whether the network device indicates the terminal device to perform TA adjustment, and an operation indicated by at least one of the first parameter, the second parameter, and the third parameter needs to be performed.

According to a thirteenth aspect, a downlink transmission method is provided. The method may be performed by a terminal device, or may be performed by a component (for example, a chip or a circuit) of a terminal device. This is not limited. For ease of description, the following uses an example in which the method is performed by a terminal device for description.

The method may include: The terminal device receives first signaling from a network device, where the first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical downlink shared channel PDSCH. The terminal device determines the first slot set, where the first slot set is a set of N1 slots that start from the first reference slot and are closest to the first reference slot and that do not meet a second condition, and the second condition includes: a symbol type of at least one symbol in a first symbol set of a first slot is different from a first symbol type, where the first symbol type is non-subband full duplex SBFD symbol or SBFD symbol, the non-SBFD symbol includes at least one of a flexible symbol or a downlink symbol, the first slot is a slot traversed forward from the first reference time unit, a first symbol set of any slot is determined based on the third indication information and the fourth indication information, and the first symbol set includes L consecutive symbols. The terminal device receives the first signal from the network device on a first symbol set corresponding to each slot in the first slot set.

That the first slot does not meet the second condition may be understood as follows: When the first symbol type is SBFD symbol, if all symbols in the first symbol set of the first slot are SBFD symbols, it is considered that the first slot does not meet the second condition. When the first symbol type is non-SBFD symbol, and all symbols in the first symbol set of the first slot are flexible symbols, or all symbols in the first symbol set of the first slot are downlink symbols, or some symbols in the first symbol set of the first slot are flexible symbols and all remaining symbols are downlink symbols, it is considered that the first slot does not meet the second condition in all the foregoing three cases.

In the foregoing technical solution, the second condition is added, so that a slot that meets the second condition cannot be used to transmit a multi-slot PDSCH, thereby avoiding a problem that transmission performance may deteriorate or normal communication may fail because a multi-slot PDSCH is transmitted across a non-SBFD symbol and an SBFD symbol in one slot.

According to a fourteenth aspect, a downlink transmission method is provided. The method may be performed by a terminal device, or may be performed by a component (for example, a chip or a circuit) of a terminal device. This is not limited. For ease of description, the following uses an example in which the method is performed by a terminal device for description.

The method may include: The terminal device receives first signaling from a network device, where the first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical downlink shared channel PDSCH. The terminal device determines the first slot set, where the first slot set is a set of slots in a second slot set other than a slot that meets a second condition, the second slot set includes N1 consecutive slots including the first reference slot and a subsequent slot, and the second condition includes: a symbol type of at least one symbol in a first symbol set of a first slot is different from a first symbol type, where the first symbol type is non-subband full duplex SBFD symbol or SBFD symbol, the non-SBFD symbol includes at least one of a flexible symbol or a downlink symbol, the first slot is a slot traversed forward from the first reference time unit, a first symbol set of any slot is determined based on the third indication information and the fourth indication information, and the first symbol set includes L consecutive symbols. The terminal device receives the first signal from the network device on a first symbol set corresponding to each slot in the first slot set.

It should be understood that the technical solution in the thirteenth aspect may be considered as a specific implementation of determining a slot set for multi-slot PDSCH transmission that is provided based on an existing available slot counting method. The technical solution in the fourteenth aspect may be considered as a specific implementation of determining a slot set for multi-slot PDSCH transmission that is provided based on an existing physical slot counting method.

For beneficial effects of the fourteenth aspect, refer to the descriptions in the thirteenth aspect. Details are not described herein again.

According to a fifteenth aspect, a downlink transmission method is provided. The method may be performed by a network device, or may be performed by a component (for example, a chip or a circuit) of a network device. This is not limited. For ease of description, the following uses an example in which the method is performed by a network device for description.

The method may include: The network device sends first signaling to a terminal device, where the first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical downlink shared channel PDSCH. The network device determines the first slot set, where the first slot set is a set of N1 slots that start from the first reference slot and are closest to the first reference slot and that do not meet a second condition, and the second condition includes: a symbol type of at least one symbol in a first symbol set of a first slot is different from a first symbol type, where the first symbol type is non-subband full duplex SBFD symbol or SBFD symbol, the non-SBFD symbol includes at least one of a flexible symbol or a downlink symbol, the first slot is a slot traversed forward from the first reference time unit, a first symbol set of any slot is determined based on the third indication information and the fourth indication information, and the first symbol set includes L consecutive symbols. The network device sends the first signal to the terminal device on a first symbol set corresponding to each slot in the first slot set.

According to a sixteenth aspect, a downlink transmission method is provided. The method may be performed by a network device, or may be performed by a component (for example, a chip or a circuit) of a network device. This is not limited. For ease of description, the following uses an example in which the method is performed by a network device for description.

The method may include: The network device sends first signaling to a terminal device, where the first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical downlink shared channel PDSCH. The network device determines the first slot set, where the first slot set is a set of slots in a second slot set other than a slot that meets a second condition, the second slot set includes N1 consecutive slots including the first reference slot and a subsequent slot, and the second condition includes: a symbol type of at least one symbol in a first symbol set of a first slot is different from a first symbol type, where the first symbol type is non-subband full duplex SBFD symbol or SBFD symbol, the non-SBFD symbol includes at least one of a flexible symbol or a downlink symbol, the first slot is a slot traversed forward from the first reference time unit, a first symbol set of any slot is determined based on the third indication information and the fourth indication information, and the first symbol set includes L consecutive symbols. The network device sends the first signal to the terminal device on a first symbol set corresponding to each slot in the first slot set.

It should be understood that the technical solution in the fifteenth aspect may be considered as a specific implementation of determining a slot set for multi-slot PDSCH transmission that is provided based on an existing available slot counting method. The technical solution in the sixteenth aspect may be considered as a specific implementation of determining a slot set for multi-slot PDSCH transmission that is provided based on an existing physical slot counting method.

For beneficial effects of the fifteenth aspect and the sixteenth aspect, refer to the descriptions in the thirteenth aspect. Details are not described herein again.

In some implementations of any one of the thirteenth aspect to the sixteenth aspect, any symbol in a first symbol set of the first reference slot is at least one symbol in a non-SBFD symbol, and the first symbol type is non-SBFD symbol; or any symbol in a first symbol set of the first reference slot is an SBFD symbol, and the first symbol type is SBFD symbol.

In some implementations of any one of the thirteenth aspect to the sixteenth aspect, when a first symbol set of the first reference slot includes an uplink symbol, the first symbol type is determined based on a second slot, where the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

In some implementations of any one of the thirteenth aspect to the sixteenth aspect, when a first symbol set of the first reference slot includes an SBFD symbol and a non-SBFD symbol, the first symbol type is determined based on a second slot, where the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

In some implementations of any one of the thirteenth aspect to the sixteenth aspect, the first signaling further includes the first symbol type.

In some implementations of any one of the thirteenth aspect to the sixteenth aspect, the first signaling further includes a first frequency range, and the first frequency range is a frequency range for sending the first signal; and if the first frequency range is not completely included in a frequency range of a downlink subband of an SBFD symbol, the first symbol type is non-SBFD symbol; or if the first frequency range is completely included in a frequency range of a downlink subband of an SBFD symbol, the first symbol type is SBFD symbol.

According to a seventeenth aspect, a communication apparatus is provided. The apparatus is configured to perform the method provided in the first aspect, the second aspect, the fifth aspect, the sixth aspect, the ninth aspect, the tenth aspect, the thirteenth aspect, or the fourteenth aspect. Specifically, the apparatus may include units and/or modules configured to perform the method in any one of the first aspect, the second aspect, the fifth aspect, the sixth aspect, the ninth aspect, the tenth aspect, the thirteenth aspect, the fourteenth aspect, or the possible implementations of the first aspect, the second aspect, the fifth aspect, the sixth aspect, the ninth aspect, the tenth aspect, the thirteenth aspect, or the fourteenth aspect, for example, a processing unit and/or a communication unit.

In an implementation, the apparatus is a terminal device. When the apparatus is a terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighteenth aspect, a communication apparatus is provided. The apparatus is configured to perform the method provided in the third aspect, the fourth aspect, the seventh aspect, the eighth aspect, the eleventh aspect, the twelfth aspect, the fifteenth aspect, or the sixteenth aspect. Specifically, the apparatus may include units and/or modules configured to perform the method in any one of the third aspect, the fourth aspect, the seventh aspect, the eighth aspect, the eleventh aspect, the twelfth aspect, the fifteenth aspect, the sixteenth aspect, or the possible implementations of the third aspect, the fourth aspect, the seventh aspect, the eighth aspect, the eleventh aspect, the twelfth aspect, the fifteenth aspect, or the sixteenth aspect, for example, a processing unit and/or a communication unit.

In an implementation, the apparatus is a network device. When the apparatus is a network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a nineteenth aspect, a communication apparatus is provided. The apparatus includes at least one processor. The at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method in any one of the first aspect, the second aspect, the fifth aspect, the sixth aspect, the ninth aspect, the tenth aspect, the thirteenth aspect, or the fourteenth aspect and any possible implementation in the first aspect, the second aspect, the fifth aspect, the sixth aspect, the ninth aspect, the tenth aspect, the thirteenth aspect, or the fourteenth aspect.

In an implementation, the apparatus is a terminal device.

In another implementation, the apparatus is a chip, a chip system, or a circuit used in a terminal device.

According to a twentieth aspect, a communication apparatus is provided. The apparatus includes at least one processor. The at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method in any one of the third aspect, the fourth aspect, the seventh aspect, the eighth aspect, the eleventh aspect, the twelfth aspect, the fifteenth aspect, or the sixteenth aspect and any possible implementation in the third aspect, the fourth aspect, the seventh aspect, the eighth aspect, the eleventh aspect, the twelfth aspect, the fifteenth aspect, or the sixteenth aspect.

In an implementation, the apparatus is a network device.

In another implementation, the apparatus is a chip, a chip system, or a circuit used in a network device.

According to a twenty-first aspect, a processor is provided, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twenty-second aspect, a computer-readable storage medium is provided. The computer-readable storage medium stores program code executed by a device, and the program code is used to perform the method according to any one of the first aspect to the sixteenth aspect and the possible implementations of the first aspect to the sixteenth aspect.

According to a twenty-third aspect, a computer program product including instructions is provided. When the computer program product runs on a computer, the computer is enabled to perform the method according to any one of the first aspect to the sixteenth aspect and the possible implementations of the first aspect to the sixteenth aspect.

According to a twenty-fourth aspect, a chip is provided. The chip includes a processor and a communication interface. The processor reads, through the communication interface, instructions stored in a memory, to perform the method according to any one of the first aspect to the sixteenth aspect and the possible implementations of the first aspect to the sixteenth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the first aspect to the sixteenth aspect and the possible implementations of the first aspect to the sixteenth aspect.

According to a twenty-fifth aspect, a communication system is provided. The communication system includes the communication apparatuses shown in the nineteenth aspect and the twentieth aspect.

### BRIEF DESCRIPTION OF DRAWINGS

FIG. 1 is a diagram of a communication system according to an embodiment of this application;
FIG. 2 is a time-frequency diagram of subband full duplex;
FIG. 3 is a diagram of determining, by using a physical slot counting method, a time domain resource for transmitting a multi-slot PUSCH/PUCCH;
FIG. 4 is a diagram of determining, by using an available slot counting method, a time domain resource for transmitting a multi-slot PUSCH/PUCCH;
FIG. 5 is a diagram in which an SBFD symbol and a non-SBFD symbol that are allocated to a multi-slot PUSCH/PUCCH are in one slot;
FIG. 6 is a schematic flowchart of an uplink transmission method according to this application;
FIG. 7 is a diagram of determining a first slot set;
FIG. 8 is a schematic flowchart of another uplink transmission method according to this application;
FIG. 9 is a schematic flowchart of another uplink transmission method according to this application;
FIG. 10 is a diagram of determining a first slot set;
FIG. 11 is a schematic flowchart of another uplink transmission method according to this application;
FIG. 12 is a schematic flowchart of a downlink transmission method according to this application;
FIG. 13 is a diagram of determining a first slot set;
FIG. 14 is a schematic flowchart of another downlink transmission method according to this application;
FIG. 15 is a schematic flowchart of another downlink transmission method according to this application;
FIG. 16 is a diagram of determining a first slot set;
FIG. 17 is a schematic flowchart of another downlink transmission method according to this application;
FIG. 18 is a block diagram of a communication apparatus 200 according to this application; and
FIG. 19 is a diagram of a structure of a communication apparatus 300 according to this application.

### DESCRIPTION OF EMBODIMENTS

The following describes the technical solutions in embodiments of this application with reference to the accompanying drawings.

The technical solutions in embodiments of this application may be applied to various communication systems, for example, 5th generation (5th generation, 5G), new radio (new radio, NR), long term evolution (long term evolution, LTE), internet of things (internet of things, IoT), wireless fidelity (wireless fidelity, Wi-Fi), 3rd generation partnership project (3rd generation partnership project, 3GPP)-related wireless communication, or other wireless communication that may occur in the future.

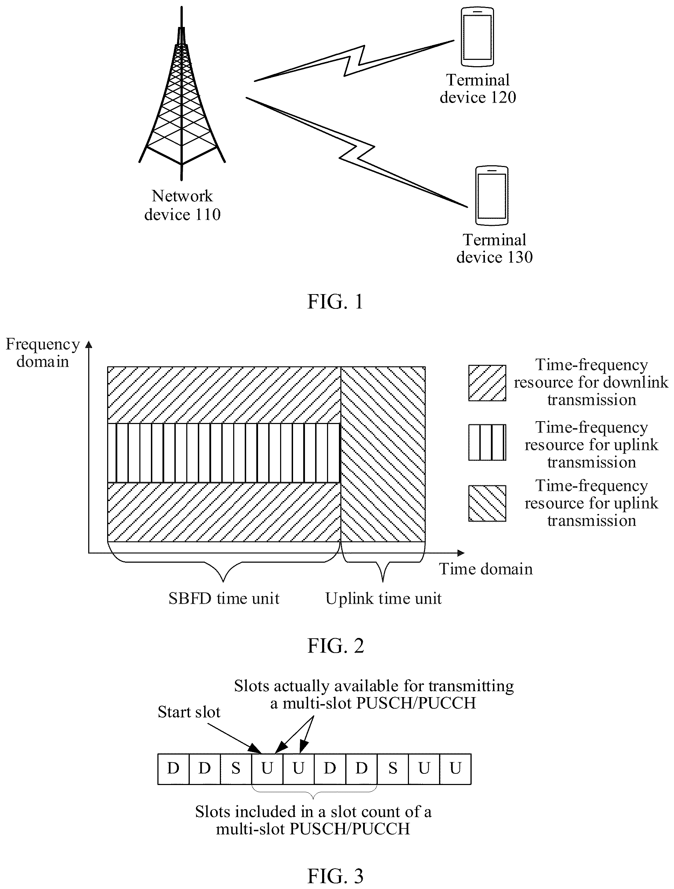

FIG. 1 is a diagram of a communication system according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 via a radio link to exchange information. It may be understood that the network device and the terminal device may also be referred to as communication devices.

The network device is a network side device having wireless sending and receiving functions. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technology, RAT), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central unit, CU), one or more distributed units (distributed unit, DU), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly implement a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For example, an access network device in a vehicle-to-everything (vehicle-to-everything, V2X) technology may be a roadside unit (roadside unit, RSU). A plurality of access network devices in a communication system may be base stations of a same type, or may be base stations of different types. The base station may communicate with the terminal device, or may communicate with the terminal device via a relay station. In embodiments of this application, the apparatus configured to implement a function of the network device may be the network device, or may be an apparatus that can support the network device in implementing the function, for example, a chip system or a combined component or part that can implement a function of the access network device. The apparatus may be installed in the network device. In embodiments of this application, the chip system may include a chip, or may include a chip and another discrete component.

The terminal device is a user side device having wireless sending and receiving functions, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC) communication, internet of things, virtual reality (virtual reality, VR), augmented reality (augmented reality, AR), industrial control (industrial control), self-driving (self-driving), remote medical (remote medical), smart grid (smart grid), smart furniture, smart office, smart wearable, smart transportation, smart city (smart city), uncrewed aerial vehicle, and robot. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be the terminal device, or may be an apparatus that can support the terminal device in implementing the function, for example, a chip system or a combined component or part that can implement a function of the terminal device. The apparatus may be installed in the terminal device.

To facilitate understanding of embodiments of this application, concepts and related procedures in this application are described first.
1. SBFD: In an SBFD solution, one carrier or one bandwidth part (bandwidth part, BWP) is divided into a plurality of non-overlapping subbands, and transmission directions of different subbands may be different. In other words, one carrier includes a first subband and a second subband that do not overlap, and the first subband and the second subband have different transmission directions. It should be noted that the first subband and the second subband are two types of subbands with different transmission directions, and do not mean that one carrier includes only two subbands. For example, one carrier includes a subband #1 and a subband #2, and transmission directions of the subband #1 and the subband #2 are different. Alternatively, one carrier includes a subband #1, a subband #2, and a subband #3, transmission directions of the subband #1 and the subband #3 are the same, and transmission directions of the subband #1 and the subband #2 are different.
2. SBFD time unit: Frequency resources in an SBFD time unit include an uplink frequency resource and a downlink frequency resource, where the uplink frequency resource is used for uplink transmission, and the downlink frequency resource is used for downlink transmission. For example, time-frequency division of a typical SBFD solution is shown in FIG. 2. A horizontal axis represents time domain, and a vertical axis represents frequency domain. In FIG. 2, two rectangular blocks filled with left slashes each represent a group of time-frequency resources used for downlink transmission, a rectangular block filled with vertical bars represents a group of time-frequency resources used for uplink transmission, and time domain resources in a time domain range occupied by the three blocks of time-frequency resources are referred to as SBFD time units.
3. Non-SBFD time unit: A frequency resource corresponding to each of all symbols included in the non-SBFD time unit is used for only downlink transmission or uplink transmission. For example, all the symbols in the non-SBFD time unit are downlink symbols; all the symbols in the non-full duplex time unit are uplink symbols; all the symbols in the non-full duplex time unit are flexible symbols; in the non-full duplex time unit, some symbols are downlink symbols, and some symbols are uplink symbols; in the non-full duplex time unit, some symbols are downlink symbols, some symbols are uplink symbols, and some symbols are flexible symbols; in the non-full duplex time unit, some symbols are downlink symbols, and some symbols are flexible symbols; or in the non-full duplex time unit, some symbols are uplink symbols, and some symbols are flexible symbols. For example, a rectangular block filled with right slashes in FIG. 2 represents a group of time-frequency resources used for uplink transmission, and slots in a time domain range occupied by the time-frequency resources are referred to as uplink time units. Transmission directions of all frequency resources in these time units are uplink, and these time units may be referred to as non-SBFD time units.
4. Time unit: The time unit may be a slot, a symbol, a subframe, a half-frame, a frame, a mini-subframe, a mini-slot, or a transmission occasion (transmission occasion, TO). This is not limited in this application.
5. Symbol (symbol): is an abbreviation for a time domain symbol, and may also be referred to as an OFDM symbol. It should be noted that the time domain symbol may also be named in combination with other multiple access modes. This is not limited in embodiments of this application. For different subcarrier spacings, time domain symbol lengths may be different.
   It should be understood that four types of symbols may be included in one slot (slot): a downlink symbol, an uplink symbol, an SBFD symbol, and a flexible symbol. The uplink symbol can be used for only uplink transmission. The downlink symbol can be used for only downlink transmission. The flexible symbol has no determined transmission direction, and may be used for uplink transmission or downlink transmission based on an indication of control signaling. Frequency resources on the SBFD symbol include an uplink frequency resource and a downlink frequency resource, where the uplink frequency resource is used for uplink transmission, and the downlink frequency resource is used for downlink transmission. Symbols in one slot may be all downlink symbols, all uplink symbols, all flexible symbols, all SBFD symbols, or a combination of several types of symbols.
6. Subband: The subband is a part of a frequency band in a carrier, that is, one or more contiguous physical resource blocks (physical resource block, PRB) in frequency domain. In this application, the subband may also be understood as a frequency resource.
7. Multi-slot (Multi-slot) PUSCH: includes a PUSCH repetition type A (PUSCH repetition type A), a PUSCH repetition type B (PUSCH repetition type B), and a transport block processing over multiple slots PUSCH (transport block processing over multiple slots, TBoMS PUSCH). A multi-slot PUCCH includes a PUCCH repetition (PUCCH repetition).

There are two methods for determining a time domain resource for transmitting a multi-slot PUSCH/PUCCH: One is a physical slot counting method, and the other is an available slot counting method. The following describes the two technical methods in detail.

The first slot counting method is the physical slot counting method.

A physical slot may be understood as a slot defined in an NR frame structure. Each physical slot is included in a slot count of a multi-slot PUSCH/PUCCH. For example, as shown in FIG. 3, a TDD uplink-downlink slot configuration is DDSUU. D represents a downlink slot, all symbols in the downlink slot are downlink symbols, U represents an uplink slot, all symbols in the uplink slot are uplink symbols, S is a special slot, and S includes a flexible symbol. A network device indicates that a total quantity of slots of the multi-slot PUSCH/PUCCH is 4, and a start slot is a 4^{th} slot (namely, a 1^{st} U slot) in DDSUU. In this case, each slot starting from this slot is included in the slot count of the multi-slot PUSCH/PUCCH until a quantity of included slots reaches the total quantity 4 of slots indicated by the network device. In other words, a 4^{th} slot to a 7^{th} slot in FIG. 3 are included in the slot count of the multi-slot PUSCH/PUCCH by using the method. Then, for the slot that is included in the slot count of the multi-slot PUSCH/PUCCH, whether the multi-slot PUSCH/PUCCH can be transmitted in the slot further needs to be determined according to collision rules (collision rules). For example, the collision rules include: If at least one symbol in a symbol set used to transmit the multi-slot PUSCH/PUCCH in a slot #1 included in the slot count of the multi-slot PUSCH/PUCCH overlaps a downlink symbol in a semi-static configuration (tdd-UL-DL-ConfigurationCommon and tdd-UL-DL-ConfigurationDedicated) (which may also be understood as that at least one symbol in the symbol set used to transmit the multi-slot PUSCH/PUCCH in the slot #1 is a semi-statically configured downlink symbol), even if the symbols partially overlap, transmission of the multi-slot PUSCH/PUCCH in the slot #1 is canceled. As shown in FIG. 3, although a 6^{th} slot and a 7^{th} slot are slots included in the slot count of the multi-slot PUSCH/PUCCH, because the 6^{th} slot is a downlink slot, all symbols in a symbol set used to transmit the multi-slot PUSCH/PUCCH in the 6^{th} slot are downlink symbols. The 7^{th} slot is similar. Details are not described herein again. Therefore, in this method, the multi-slot PUSCH/PUCCH can be transmitted in only a 4^{th} slot and a 5^{th} slot.

The second slot counting method is the available slot counting method.

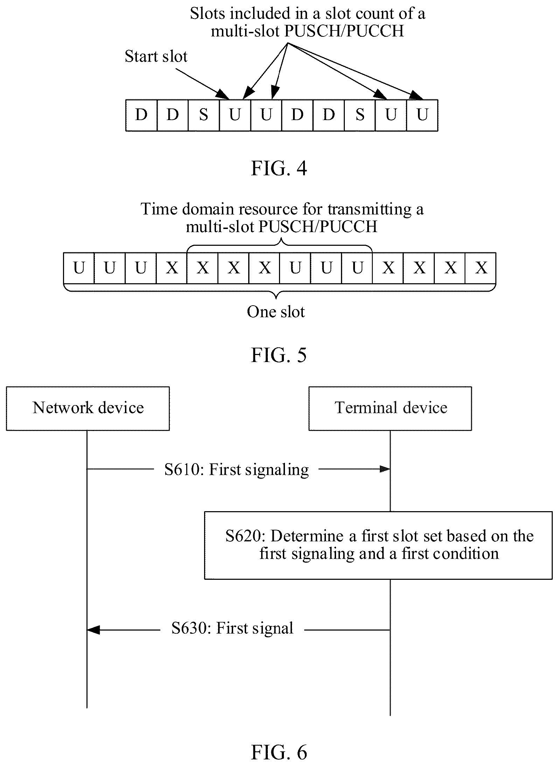

An available slot is determined jointly based on a cell-level uplink-downlink configuration (tdd-UL-DL-ConfigurationCommon), a UE-level uplink-downlink configuration (tdd-UL-DL-ConfigurationDedicated), an SSB burst position (ssb-PositionsInBurst), and time domain resource allocation (time domain resource allocation, TDRA) information indicated by downlink control information (downlink control information, DCI). Specifically, in a slot, if at least one symbol in a symbol set (that is, a symbol set used to transmit a multi-slot PUSCH/PUCCH) allocated in a row in a TDRA table indicated by the DCI overlaps a downlink symbol indicated by tdd-UL-DL-ConfigurationCommon or tdd-UL-DL-ConfigurationDedicated (if configured), or overlaps an SSB symbol indicated by ssb-PositionsInBurst, the slot is not an available slot, and is not included in a slot count of the multi-slot PUSCH/PUCCH. Otherwise, the slot is an available slot, and is included in a slot count of the multi-slot PUSCH/PUCCH. For example, as shown in FIG. 4, a TDD uplink-downlink configuration is DDSUU. D represents a downlink slot, U represents an uplink slot, S is a special slot, and S includes a flexible symbol. A network device indicates that a total quantity of slots for the multi-slot PUSCH/PUCCH is 4, and a start slot is a 4^{th} slot (namely, a 1^{st} U slot) in DDSUU. There is no SSB symbol in the time domain resource shown in FIG. 4. If there is no uplink symbol in the S slot and the D symbol in the S slot overlaps a symbol in the TDRA table, starting from the 4^{th} slot, only an uplink slot is included in the slot count of the multi-slot PUSCH/PUCCH until a quantity of included slots reaches the total quantity 4 of slots indicated by the network device. Therefore, in the method, the multi-slot PUSCH/PUCCH may be transmitted in the 4^{th} slot, a 5^{th} slot, a 9^{th} slot, and a 10^{th} slot shown in FIG. 4 (that is, all uplink slots in FIG. 4).

For example, the multi-slot PUSCH/PUCCH that supports counting based on a physical slot includes a PUSCH repetition type A, a PUCCH repetition, and the like. The multi-slot PUSCH/PUCCH that supports counting based on an available slot includes a PUSCH repetition type A, a transport block processing over multiple slots PUSCH (TBoMS PUSCH), a transport block processing over multiple slots PUSCH repetition (TBoMS PUSCH repetition), a PUCCH repetition, and the like.

Currently, both an SBFD symbol and a non-SBFD symbol (for example, an uplink symbol or a flexible symbol) may be allocated for multi-slot PUSCH/PUCCH transmission. For example, a multi-slot PUSCH/PUCCH may be transmitted on an uplink subband of an SBFD symbol and an uplink symbol. However, as shown in FIG. 5, if the allocated SBFD symbol (referring to the symbol X in the figure) and non-SBFD symbol (referring to the symbol U in the figure) are in one slot, transmitting the multi-slot PUSCH/PUCCH across the SBFD symbol and the non-SBFD symbol in the slot may cause transmission performance deterioration, and even cause a failure in normal communication.

In view of this, this application provides an uplink transmission method, to effectively resolve the foregoing technical problem. The following describes in detail the method provided in this application.

FIG. 6 is a schematic flowchart of an uplink transmission method according to this application. It should be understood that the method may be considered as a specific implementation of determining a slot set for multi-slot PUSCH/PUCCH transmission that is provided based on an existing available slot counting method. The method includes the following steps.

S610: A network device sends first signaling to a terminal device. Correspondingly, the terminal device receives the first signaling from the network device.

The first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L, N1 and L are positive integers, and the first signal is carried on a first PUSCH or a first PUCCH.

For example, the first signaling is DCI or radio resource control (radio resource control, RRC).

For example, the first signal is a PUSCH repetition type A, or a TBoMS PUSCH, or a TBoMS PUSCH repetition, or a PUCCH repetition.

S620: The terminal device determines the first slot set based on the first signaling and a first condition.

Because the terminal device determines the first slot set by using the available slot counting method, the first slot set is a set of N1 slots that start from the first reference slot and are closest to the first reference slot and that do not meet the first condition. The first condition includes: A first symbol set of a first slot includes a non-subband full duplex SBFD symbol and an SBFD symbol. The non-SBFD symbol includes at least one of a flexible symbol or an uplink symbol, and the first slot is a slot traversed forward from the first reference slot. It should be understood that a first symbol set of any slot (for example, the first slot) is determined based on the third indication information and the fourth indication information, and the first symbol set includes L consecutive symbols. Specifically, if the third indication information indicates a start symbol P, the first symbol set of the first slot is a symbol set of L consecutive symbols with the symbol P as a start symbol in the first slot.

That the first slot meets the first condition may be understood as follows: If the first symbol set of the first slot includes an SBFD symbol and an uplink symbol, or the first symbol set of the first slot includes an SBFD symbol and a flexible symbol, or the first symbol set of the first slot includes an SBFD symbol, an uplink symbol, and a flexible symbol, it is considered that the first slot meets the first condition in all the foregoing three cases.

Optionally, when the first signal cannot be simultaneously transmitted on a non-SBFD symbol and an SBFD symbol in one slot, the terminal device determines the first slot set based on the first condition. When the first signal can be simultaneously transmitted on a non-SBFD symbol and an SBFD symbol in one slot, the terminal device may ignore the first condition.

It may be understood that, if simultaneous transmission on a non-SBFD symbol and an SBFD symbol in one slot is supported, it is considered that transmission of the first signal is not affected when the network device switches between a non-SBFD symbol and an SBFD symbol in one slot. For example, that transmission of the first signal is not affected includes but is not limited to that transmission of the first signal is not interrupted, discontinuity of a phase of the first signal is not caused, or the like.

It may be further understood that, when the network device switches between a non-SBFD symbol and an SBFD symbol in one slot, if transmission of the first signal is not affected, the network device does not perform an operation that affects transmission of the first signal. The operation includes but is not limited to an operation that the network device does not switch an antenna panel, an operation that the network device switches a filter, an operation that the network device indicates the terminal device to perform TA adjustment, or the like.

It should be understood that the terminal device also needs to determine the first slot set, and send first information on a first symbol set of each slot in the first slot set. Therefore, the network device needs to notify the terminal device whether simultaneous transmission on a non-SBFD symbol and an SBFD symbol in one slot is supported. For example, the following provides two specific implementations.

In an implementation, the network device sends first information to the terminal device, where the first information indicates whether simultaneous transmission on a non-SBFD symbol and an SBFD symbol in one slot is supported. Correspondingly, the terminal device receives the first information from the network device. For example, the first information is 1-bit (bit) information, where 0 indicates that simultaneous transmission on a non-SBFD symbol and an SBFD symbol in one slot is supported, 1 indicates that simultaneous transmission on a non-SBFD symbol and an SBFD symbol in one slot is not supported, and vice versa.

In another implementation, the network device sends second information to the terminal device, where the second information includes a plurality of parameters, and the plurality of parameters are used to jointly determine whether simultaneous transmission on a non-SBFD symbol and an SBFD symbol in one slot is supported. Correspondingly, the terminal device receives the second information from the network device, and determines, based on the plurality of parameters, whether simultaneous transmission on a non-SBFD symbol and an SBFD symbol in one slot is supported. For example, the plurality of parameters include but are not limited to a first parameter, a second parameter, and a third parameter. The first parameter indicates whether the network device needs to switch an antenna panel, the second parameter indicates whether the network device needs to switch a filter, and the third parameter indicates whether the network device indicates the terminal device to perform TA adjustment. When an operation indicated by at least one of the plurality of parameters (for example, the second parameter) needs to be performed, the terminal device considers that simultaneous transmission on a non-SBFD symbol and an SBFD symbol in one slot is not supported. When none of operations indicated by the plurality of parameters needs to be performed, the terminal device considers that simultaneous transmission on a non-SBFD symbol and an SBFD symbol in one slot is supported.

It should be noted that the first slot set is a set of N1 slots that start from the first reference slot and are closest to the first reference slot and that do not meet the first condition. This may also be understood as that the first slot set is a set obtained by traversing the first reference slot and each slot after the first reference slot until the N1 slots that are closest to the first reference slot and that do not meet the first condition are determined.

It should be further noted that the first slot is a slot traversed forward from the first reference slot, and the first slot herein may be the first reference slot.

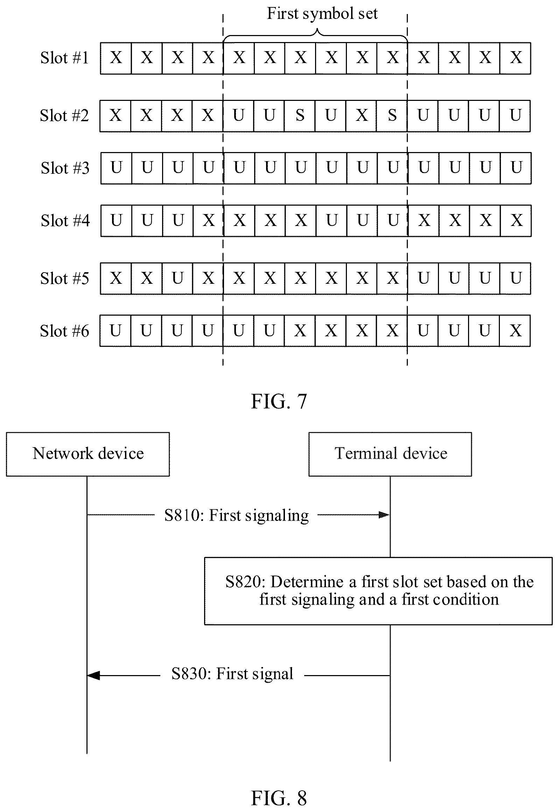

With reference to FIG. 7, the following uses an example to describe how to determine the first slot set based on the first condition. For example, N1 indicated by the first indication information is equal to 3, the first reference slot indicated by the second indication information is a slot #1 in the figure, the third indication information indicates a 5^{th} symbol in the first slot, and L indicated by the fourth indication information is equal to 6. In the figure, X represents an SBFD symbol, U represents an uplink symbol, and S represents a flexible symbol.

The terminal device traverses each slot forward from the slot #1 based on the first condition, and determines whether a currently traversed slot can be included in the first slot set. Specifically, if a first symbol set of the slot #1 does not meet the first condition, the slot #1 is included in the first slot set; if a first symbol set of a slot #2 meets the first condition, the slot #2 is not included in the first slot set; if a first symbol set of a slot #3 does not meet the first condition, the slot #3 is included in the first slot set; if a first symbol set of a slot #4 meets the first condition, the slot #4 is not included in the first slot set; and if a first symbol set of a slot #5 does not meet the first condition, the slot #5 is included in the first slot set. In this case, the quantity of slots in the first slot set meets N1=3, and the terminal device no longer traverses a slot #6 forward, and finally determines that the first slot set includes the slot #1, the slot #3, and the slot #5 in the figure.

S630: The terminal device sends the first signal to the network device on a first symbol set corresponding to each slot in the first slot set. Correspondingly, the network device receives the first signal from the terminal device on the first symbol set corresponding to each slot.

It should be understood that the network device and the terminal device determine the first slot set according to a same method. For a specific determining process, refer to the foregoing descriptions. Details are not described herein again.

It can be learned that, in the method, the first condition is added, so that a slot that meets the first condition cannot be used to transmit a multi-slot PUSCH/PUCCH, thereby avoiding a problem that transmission performance may deteriorate or normal communication may fail because a multi-slot PUSCH/PUCCH is transmitted across a non-SBFD symbol and an SBFD symbol in one slot.

FIG. 8 is a schematic flowchart of another uplink transmission method according to this application. It should be understood that the method may be considered as a specific implementation of determining a slot set for multi-slot PUSCH/PUCCH transmission that is provided based on an existing physical slot counting method. The method includes the following steps.

S810: A network device sends first signaling to a terminal device. Correspondingly, the terminal device receives the first signaling from the network device.

For example, the first signaling is DCI or RRC.

For example, the first signal is a PUSCH repetition type A or a PUCCH repetition.

For descriptions of S810, refer to the descriptions of S610. Details are not described herein again.

S820: The terminal device determines the first slot set based on the first signaling and a first condition.

If the terminal device determines the first slot set by using the physical slot counting method, the first slot set is a set of slots in a second slot set other than a slot that meets the first condition. The second slot set includes N1 consecutive slots including the first reference slot and a slot after the first reference slot. The first condition includes: A first symbol set of a first slot includes a non-subband full duplex SBFD symbol and an SBFD symbol. The non-SBFD symbol includes at least one of a flexible symbol or an uplink symbol, and the first slot is a slot traversed forward from the first reference slot. It should be understood that a first symbol set of any slot (for example, the first slot) is determined based on the third indication information and the fourth indication information, and the first symbol set includes L consecutive symbols. Specifically, if the third indication information indicates a start symbol P, the first symbol set of the first slot is a symbol set of L consecutive symbols with the symbol P as a start symbol in the first slot.

For specific descriptions of the first condition, refer to the descriptions in S620. Details are not described herein again.

With reference to FIG. 7, the following uses an example to describe how to determine the first slot set based on the first condition. For example, N1 indicated by the first indication information is equal to 5, the first reference slot indicated by the second indication information is a slot #1 in the figure, the third indication information indicates a 5^{th} symbol in the first slot, and L indicated by the fourth indication information is equal to 6.

The terminal device determines that the second slot set includes a slot #1 to a slot #5. Specifically, if a first symbol set of the slot #1 does not meet the first condition, the slot #1 is included in the first slot set; if a first symbol set of the slot #2 meets the first condition, the slot #2 is not included in the first slot set; if a first symbol set of the slot #3 does not meet the first condition, the slot #3 is included in the first slot set; if a first symbol set of the slot #4 meets the first condition, the slot #4 is not included in the first slot set; and if a first symbol set of the slot #5 does not meet the first condition, the slot #5 is included in the first slot set. Finally, it is determined that the first slot set includes the slot #1, the slot #3, and the slot #5 in the figure.

S830: The terminal device sends the first signal to the network device on a first symbol set corresponding to each slot in the first slot set. Correspondingly, the network device receives the first signal from the terminal device on the first symbol set corresponding to each slot.

It should be understood that the network device and the terminal device determine the first slot set according to a same method. For a specific determining process, refer to the foregoing descriptions. Details are not described herein again.

For beneficial effects of this embodiment, refer to the descriptions in the embodiment corresponding to FIG. 6. Details are not described herein again.

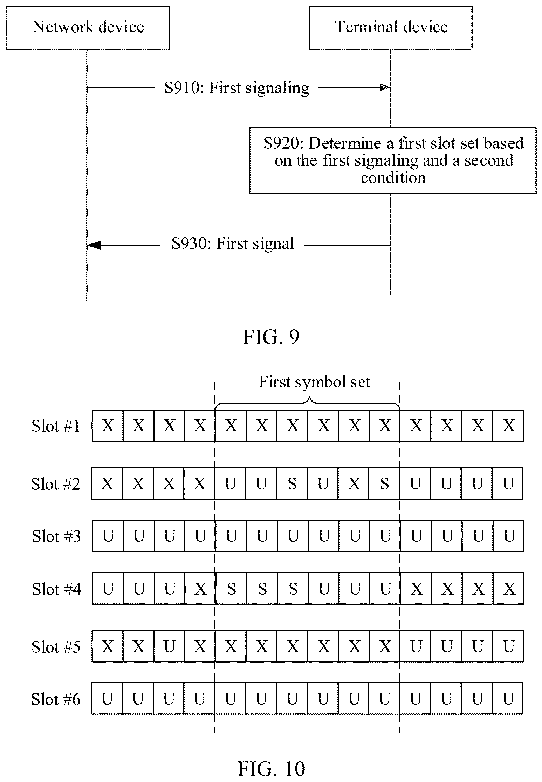

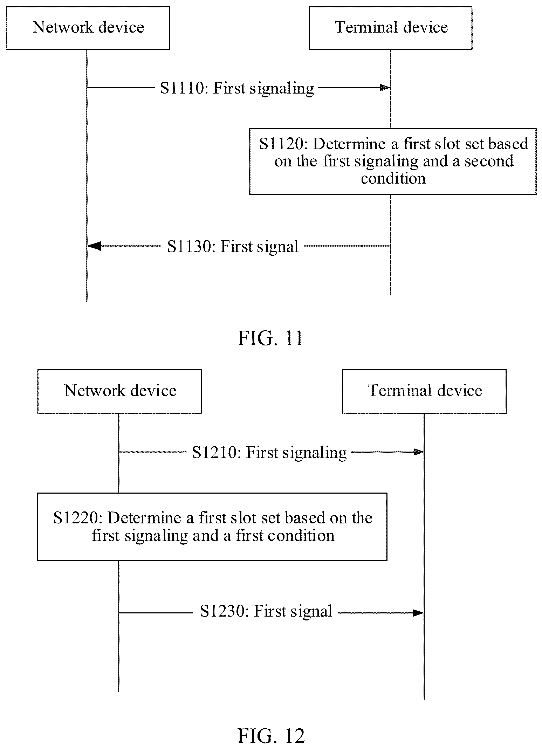

In addition, this application further provides another multi-slot PUSCH/PUCCH transmission solution. The following describes in detail an implementation process of the solution with reference to FIG. 9 and FIG. 11.

FIG. 9 is a schematic flowchart of another uplink transmission method according to this application. It should be understood that the method may be considered as a specific implementation of determining a slot set for multi-slot PUSCH/PUCCH transmission that is provided based on an existing available slot counting method. The method includes the following steps.

S910: A network device sends first signaling to a terminal device. Correspondingly, the terminal device receives the first signaling from the network device.

For example, the first signaling is DCI or RRC.

For example, the first signal is a PUSCH repetition type A, or a TBoMS PUSCH, or a TBoMS PUSCH repetition, or a PUCCH repetition.

For descriptions of S910, refer to the descriptions of S610. Details are not described herein again.

S920: The terminal device determines the first slot set based on the first signaling and a second condition.

Because the terminal device determines the first slot set by using the available slot counting method, the first slot set is a set of N1 slots that start from the first reference slot and are closest to the first reference slot and that do not meet the second condition. The second condition includes: A symbol type of at least one symbol in a first symbol set of a first slot is different from a first symbol type. The first symbol type is non-subband full duplex SBFD symbol or SBFD symbol, the non-SBFD symbol includes at least one of a flexible symbol or an uplink symbol, and the first slot is a slot traversed forward from the first reference time unit. It should be understood that a first symbol set of any slot (for example, the first slot) is determined based on the third indication information and the fourth indication information, and the first symbol set includes L consecutive symbols. Specifically, if the third indication information indicates a start symbol P, the first symbol set of the first slot is a symbol set of L consecutive symbols with the symbol P as a start symbol in the first slot.

That the first slot meets the second condition may be understood as follows: When the first symbol type is SBFD symbol, it is considered that the first slot meets the second condition, provided that a symbol in the first symbol set of the first slot is a non-SBFD symbol. For example, each first slot in which a first symbol set is UXXSU, XXXXS, and XXXUU is a first slot that meets the second condition. When the first symbol type is non-SBFD symbol, it is considered that the first slot meets the second condition, provided that a symbol in the first symbol set of the first slot is an SBFD symbol. For example, each first slot in which a first symbol set is UXUSU, UUUXS, and XXXUU is a first slot that meets the second condition. It should be understood that in the foregoing example, U represents an uplink symbol, S represents a flexible symbol, and X represents an SBFD symbol.

That the first slot does not meet the second condition may be understood as follows: When the first symbol type is SBFD symbol, if all symbols in the first symbol set of the first slot are SBFD symbols, it is considered that the first slot does not meet the second condition. When the first symbol type is non-SBFD symbol, and all symbols in the first symbol set of the first slot are flexible symbols, or all symbols in the first symbol set of the first slot are uplink symbols, or some symbols in the first symbol set of the first slot are flexible symbols and all remaining symbols are uplink symbols, it is considered that the first slot does not meet the second condition in all the foregoing three cases.

Optionally, any symbol in a first symbol set of the first reference slot is at least one symbol in a non-SBFD symbol, and the first symbol type is non-SBFD symbol. For example, if all symbols in the first symbol set of the first slot are flexible symbols, or all symbols in the first symbol set of the first slot are uplink symbols, or some symbols in the first symbol set of the first slot are flexible symbols and all remaining symbols are uplink symbols, it is considered that the first symbol type is non-SBFD symbol.

Optionally, any symbol in a first symbol set of the first reference slot is an SBFD symbol, and the first symbol type is SBFD symbol.

Optionally, when a first symbol set of the first reference slot includes a downlink symbol, or when a first symbol set of the first reference slot includes an SBFD symbol and a non-SBFD symbol, the first symbol type is determined based on a second slot. The second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol. The following provides descriptions by using an example.

For example, if first symbol sets of the first reference slot and a 1^{st} slot, a 2^{nd} slot, and a 3^{rd} slot after the first reference slot are respectively DDDDD, DDDUD, XXUUU, and UUSUU, the second slot is the 3^{rd} slot after the first reference slot. Because all symbols in the first symbol set of the 3^{rd} slot after the first reference slot are non-SBFD symbols (UUSUU), the first symbol type is non-SBFD symbol. It should be understood that in the foregoing example, U represents an uplink symbol, D represents a downlink symbol, S represents a flexible symbol, and X represents an SBFD symbol.

For example, if first symbol sets of the first reference slot and a 1^{st} slot, a 2^{nd} slot, and a 3^{rd} slot after the first reference slot are respectively DDDDD, DDDUD, XXXXX, and XXUUU, the second slot is the 2^{nd} slot after the first reference slot. Because all symbols in the first symbol set of the 2^{nd} slot after the first reference slot are SBFD symbols (XXXXX), the first symbol type is SBFD symbol. It should be understood that in the foregoing example, U represents an uplink symbol, D represents a downlink symbol, and X represents an SBFD symbol.

Optionally, the first symbol type is indicated by the first signaling. In an implementation, a column is added to a TDRA table, values of the column are all candidate values of the first symbol type, the first signaling indicates a row in the TDRA table, and a value of the newly added column corresponding to the row indicated by the first signaling indicates the first symbol type. For example, in the newly added column, a value 0 indicates an SBFD symbol, a value 1 indicates a non-SBFD symbol, and vice versa. For example, an N^{th} column is added to the TDRA table, and the first signaling indicates an M^{th} row. In this case, a value in the M^{th} row and the N^{th} column is the first symbol type.

Optionally, the first signaling further includes a first frequency range, and the first frequency range is a frequency range for sending the first signal; and if the first frequency range is not completely included in a frequency range of an uplink subband of an SBFD symbol, the first symbol type is non-SBFD symbol; or if the first frequency range is completely included in a frequency range of an uplink subband of an SBFD symbol, the first symbol type is SBFD symbol. In other words, if the frequency range of the uplink subband of the SBFD symbol cannot completely cover the first frequency range, the first symbol type is non-SBFD symbol; or if the frequency range of the uplink subband of the SBFD symbol can completely cover the first frequency range, the first symbol type is SBFD symbol. For example, the SBFD symbol herein may be any SBFD symbol in any slot.

It should be noted that the first slot set is a set of N1 slots that start from the first reference slot and are closest to the first reference slot and that do not meet the second condition. This may also be understood as that the first slot set is a set obtained by traversing the first reference slot and each slot after the first reference slot until the N1 slots that are closest to the first reference slot and that do not meet the second condition are determined.

It should be further noted that the first slot is a slot traversed forward from the first reference slot, and the first slot herein may be the first reference slot.

With reference to FIG. 10, the following uses an example to describe how to determine the first slot set based on the second condition. For example, N1 indicated by the first indication information is equal to 2, the first reference slot indicated by the second indication information is a slot #1 in the figure, the third indication information indicates a 5^{th} symbol in the first slot, and L indicated by the fourth indication information is equal to 6. In the figure, X represents an SBFD symbol, U represents an uplink symbol, and S represents a flexible symbol.

For example, when the first symbol type is SBFD symbol, the terminal device traverses each slot forward from the slot #1 based on the second condition, and determines whether a currently traversed slot can be included in the first slot set. Specifically, if all symbols in a first symbol set of the slot #1 are SBFD symbols and do not meet the second condition, the slot #1 is included in the first slot set; if a first symbol set of a slot #2 includes an uplink symbol and a flexible symbol and meets the second condition, the slot #2 is not included in the first slot set; if a first symbol set of a slot #3 meets the second condition, the slot #3 is not included in the first slot set; if a first symbol set of a slot #4 meets the second condition, the slot #4 is not included in the first slot set; and if a first symbol set of a slot #5 does not meet the second condition, the slot #5 is included in the first slot set. In this case, the quantity of slots in the first slot set meets N1=2, and the terminal device no longer traverses a slot #6 forward, and finally determines that the first slot includes the slot #1 and the slot #5 in the figure.

For example, when the first symbol type is non-SBFD symbol, the terminal device traverses each slot forward from the slot #1 based on the second condition, and determines whether a currently traversed slot can be included in the first slot set. Specifically, if all symbols in a first symbol set of the slot #1 are SBFD symbols and meet the second condition, the slot #1 is not included in the first slot set; if a first symbol set of a slot #2 includes an SBFD symbol and meets the second condition, the slot #2 is not included in the first slot set; if all symbols in a first symbol set of a slot #3 are uplink symbols and do not meet the second condition, the slot #3 is included in the first slot set; and if a first symbol set of a slot #4 does not meet the second condition, the slot #4 is included in the first slot set. In this case, the quantity of slots in the first slot set meets N1=2, and the terminal device no longer traverses a slot #5 forward, and finally determines that the first slot includes the slot #3 and the slot #4 in the figure.

S930: The terminal device sends the first signal to the network device on a first symbol set corresponding to each slot in the first slot set. Correspondingly, the network device receives the first signal from the terminal device on the first symbol set corresponding to each slot.

It should be understood that the network device and the terminal device determine the first slot set according to a same method. A specific determining process is not described herein.

In the foregoing technical solution, the second condition is added, so that a slot that meets the second condition cannot be used to transmit a multi-slot PUSCH/PUCCH, thereby avoiding a problem that transmission performance may deteriorate or normal communication may fail because a multi-slot PUSCH/PUCCH is transmitted across a non-SBFD symbol and an SBFD symbol in one slot.

FIG. 11 is a schematic flowchart of another uplink transmission method according to this application. It should be understood that the method may be considered as a specific implementation of determining a slot set for multi-slot PUSCH/PUCCH transmission that is provided based on an existing physical slot counting method. The method includes the following steps.

S1110: A network device sends first signaling to a terminal device. Correspondingly, the terminal device receives the first signaling from the network device.

For example, the first signaling is DCI or RRC.

For example, the first signal is a PUSCH repetition type A or a PUCCH repetition.

For descriptions of S1110, refer to the descriptions of S910. Details are not described herein again.

S1120: The terminal device determines the first slot set based on the first signaling and a second condition.

If the terminal device determines the first slot set by using the physical slot counting method, the first slot set is a set of slots in a second slot set other than a slot that meets the second condition. The second slot set includes N1 consecutive slots including the first reference slot and a slot after the first reference slot. For specific descriptions of the second condition, refer to the descriptions in S920. Details are not described herein again.

For how to determine the first symbol type, refer to the descriptions of the first symbol type in S920. Details are not described herein again.

With reference to FIG. 10, the following uses an example to describe how to determine the first slot set based on the second condition. As shown in FIG. 10, N1 indicated by the first indication information is equal to 6, the first reference slot indicated by the second indication information is a slot #1 in the figure, the third indication information indicates a 5^{th} symbol in the first slot, and L indicated by the fourth indication information is equal to 6. In the figure, X represents an SBFD symbol, U represents an uplink symbol, and S represents a flexible symbol.

For example, the first symbol type is SBFD symbol. Specifically, the terminal device determines that the second slot set includes the slot #1 to a slot #6. If all symbols in a first symbol set of the slot #1 are SBFD symbols and do not meet the second condition, the slot #1 is included in the first slot set; if a first symbol set of the slot #2 includes an uplink symbol and a flexible symbol and meets the second condition, the slot #2 is not included in the first slot set; if a first symbol set of the slot #3 meets the second condition, the slot #3 is not included in the first slot set; if a first symbol set of the slot #4 meets the second condition, the slot #4 is not included in the first slot set; if a first symbol set of the slot #5 does not meet the second condition, the slot #5 is included in the first slot set; and if a first symbol set of the slot #6 meets the second condition, the slot #6 is not included in the first slot set. Finally, it is determined that the first slot set includes the slot #1 and the slot #5 in the figure.

For example, the first symbol type is non-SBFD symbol. Specifically, the terminal device determines that the second slot set includes the slot #1 to a slot #6. When the first symbol type is non-SBFD symbol, if all symbols in a first symbol set of the slot #1 are SBFD symbols and meet the second condition, the slot #1 is not included in the first slot set; if a first symbol set of the slot #2 includes an SBFD symbol and meets the second condition, the slot #2 is not included in the first slot set; if all symbols in a first symbol set of the slot #3 are uplink symbols and do not meet the second condition, the slot #3 is included in the first slot set; if a first symbol set of the slot #4 does not meet the second condition, the slot #4 is included in the first slot set; if a first symbol set of the slot #5 meets the second condition, the slot #5 is not included in the first slot set; and if a first symbol set of the slot #6 does not meet the second condition, the slot #6 is included in the first slot set. Finally, it is determined that the first slot set includes the slot #3, the slot #4, and the slot #6 in the figure.

S1130: The terminal device sends the first signal to the network device on a first symbol set corresponding to each slot in the first slot set. Correspondingly, the network device receives the first signal from the terminal device on the first symbol set corresponding to each slot.

It should be understood that the network device and the terminal device determine the first slot set according to a same method. A specific determining process is not described herein.

For beneficial effects of this embodiment, refer to the descriptions in the embodiment corresponding to FIG. 9. Details are not described herein again.

Same as uplink transmission, currently, both an SBFD symbol and a non-SBFD symbol (for example, a downlink symbol or a flexible symbol) may be allocated for multi-slot downlink shared channel (physical downlink shared channel, PDSCH) transmission. For example, a multi-slot PDSCH may be transmitted on a downlink subband of an SBFD symbol and a downlink symbol. However, if the allocated SBFD symbol and non-SBFD symbol are in one slot, transmitting the multi-slot PDSCH across the SBFD symbol and the non-SBFD symbol in the slot may cause transmission performance deterioration, and even cause a failure in normal communication.

In view of this, this application provides a downlink transmission method, to effectively resolve the foregoing technical problem. The following describes in detail the method provided in this application.

FIG. 12 is a schematic flowchart of a downlink transmission method according to this application. It should be understood that the method may be considered as a specific implementation of determining a slot set for multi-slot PDSCH transmission that is provided based on an existing available slot counting method. The method includes the following steps.

S1210: A network device sends first signaling to a terminal device. Correspondingly, the terminal device receives the first signaling from the network device.

The first signaling indicates the terminal device to receive a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L, N1 and L are positive integers, and the first signal is carried on a first PDSCH.

For example, the first signaling is DCI or RRC.

For example, the first signal is a PDSCH repetition or a PDSCH slot aggregation.

S1220: The network device determines the first slot set based on the first signaling and a first condition.

Because the network device determines the first slot set by using the available slot counting method, the first slot set is a set of N1 slots that start from the first reference slot and are closest to the first reference slot and that do not meet the first condition. The first condition includes: A first symbol set of a first slot includes a non-subband full duplex SBFD symbol and an SBFD symbol. The non-SBFD symbol includes at least one of a flexible symbol or a downlink symbol, and the first slot is a slot traversed forward from the first reference slot. It should be understood that a first symbol set of any slot (for example, the first slot) is determined based on the third indication information and the fourth indication information, and the first symbol set includes L consecutive symbols. Specifically, if the third indication information indicates a start symbol P, the first symbol set of the first slot is a symbol set of L consecutive symbols with the symbol P as a start symbol in the first slot.

That the first slot meets the first condition may be understood as follows: If the first symbol set of the first slot includes an SBFD symbol and a downlink symbol, or the first symbol set of the first slot includes an SBFD symbol and a flexible symbol, or the first symbol set of the first slot includes an SBFD symbol, a downlink symbol, and a flexible symbol, it is considered that the first slot meets the first condition in all the foregoing three cases.

Optionally, when the network device does not support simultaneous transmission on a non-SBFD symbol and an SBFD symbol in one slot, the network device determines the first slot set based on the first condition. When the network device supports simultaneous transmission on a non-SBFD symbol and an SBFD symbol in one slot, the network device may ignore the first condition. It may be understood that, when the network device supports simultaneous transmission on a non-SBFD symbol and an SBFD symbol in one slot, transmission of the first signal is not affected when the network device switches between a non-SBFD symbol and an SBFD symbol in one slot. For example, that transmission of the first signal is not affected includes but is not limited to that transmission of the first signal is not interrupted or discontinuity of a phase of the first signal is not caused.

It may be understood that, when the network device switches between a non-SBFD symbol and an SBFD symbol in one slot, if transmission of the first signal is not affected, the network device does not perform an operation that affects transmission of the first signal. The operation includes but is not limited to an operation that the network device does not switch an antenna panel, an operation that the network device switches a filter, an operation that the network device indicates the terminal device to perform TA adjustment, or the like.

It should be understood that the terminal device also needs to determine the first slot set, and receive first information on a first symbol set of each slot in the first slot set. Therefore, the network device needs to notify the terminal device whether simultaneous transmission on a non-SBFD symbol and an SBFD symbol in one slot is supported. For example, the following provides two specific implementations.

In an implementation, the network device sends first information to the terminal device, where the first information indicates whether the network device supports simultaneous transmission on a non-SBFD symbol and an SBFD symbol in one slot. Correspondingly, the terminal device receives the first information from the network device. For example, the first information is 1-bit (bit) information, where 0 indicates that simultaneous transmission on a non-SBFD symbol and an SBFD symbol in one slot is supported, 1 indicates that simultaneous transmission on a non-SBFD symbol and an SBFD symbol in one slot is not supported, and vice versa.

In another implementation, the network device sends second information to the terminal device, where the second information includes a plurality of parameters, and the plurality of parameters are used to jointly determine whether simultaneous transmission on a non-SBFD symbol and an SBFD symbol in one slot is supported. Correspondingly, the terminal device receives the second information from the network device, and determines, based on the plurality of parameters, whether simultaneous transmission on a non-SBFD symbol and an SBFD symbol in one slot is supported. For example, the plurality of parameters include but are not limited to a first parameter, a second parameter, and a third parameter. The first parameter indicates whether the network device needs to switch an antenna panel, the second parameter indicates whether the network device needs to switch a filter, and the third parameter indicates whether the network device indicates the terminal device to perform TA adjustment. When an operation indicated by at least one of the plurality of parameters (for example, the second parameter) needs to be performed, the terminal device considers that simultaneous transmission on a non-SBFD symbol and an SBFD symbol in one slot is not supported. When none of operations indicated by the plurality of parameters needs to be performed, the terminal device considers that simultaneous transmission on a non-SBFD symbol and an SBFD symbol in one slot is supported.

It should be noted that the first slot set is a set of N1 slots that start from the first reference slot and are closest to the first reference slot and that do not meet the first condition. This may also be understood as that the first slot set is a set obtained by traversing the first reference slot and each slot after the first reference slot until the N1 slots that are closest to the first reference slot and that do not meet the first condition are determined.

It should be further noted that the first slot is a slot traversed forward from the first reference slot, and the first slot herein may be the first reference slot.

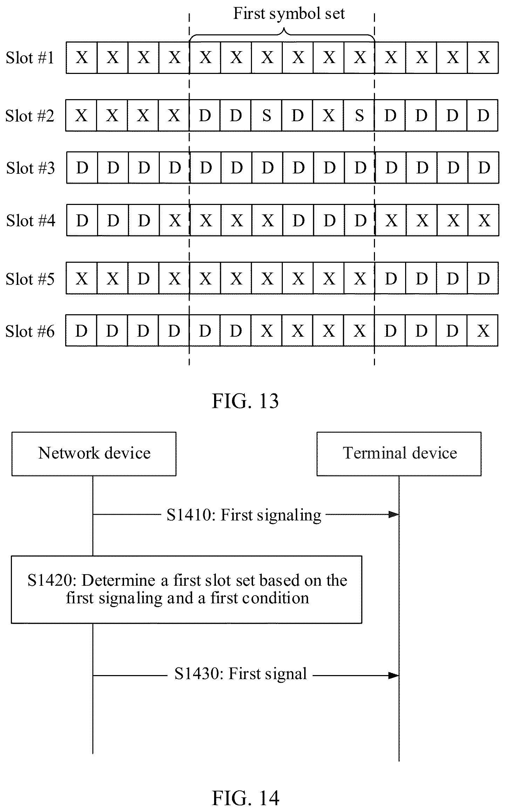

With reference to FIG. 13, the following uses an example to describe how to determine the first slot set based on the first condition. For example, N1 indicated by the first indication information is equal to 3, the first reference slot indicated by the second indication information is a slot #1 in the figure, the third indication information indicates a 5^{th} symbol in the first slot, and L indicated by the fourth indication information is equal to 6. In the figure, X represents an SBFD symbol, D represents a downlink symbol, and S represents a flexible symbol.

The terminal device traverses each slot forward from the slot #1 based on the first condition, and determines whether a currently traversed slot can be included in the first slot set. Specifically, if a first symbol set of the slot #1 does not meet the first condition, the slot #1 is included in the first slot set; if a first symbol set of a slot #2 meets the first condition, the slot #2 is not included in the first slot set; if a first symbol set of a slot #3 does not meet the first condition, the slot #3 is included in the first slot set; if a first symbol set of a slot #4 meets the first condition, the slot #4 is not included in the first slot set; and if a first symbol set of a slot #5 does not meet the first condition, the slot #5 is included in the first slot set. In this case, the quantity of slots in the first slot set meets N1=3, and the terminal device no longer traverses a slot #6 forward, and finally determines that the first slot set includes the slot #1, the slot #3, and the slot #5 in the figure.

S 1230: The network device sends the first signal to the terminal device on a first symbol set corresponding to each slot in the first slot set. Correspondingly, the terminal device receives the first signal from the network device on the first symbol set corresponding to each slot.

It should be understood that the terminal device and the network device determine the first slot set according to a same method. For a specific determining process, refer to the foregoing descriptions. Details are not described herein again.

In the foregoing technical solution, the first condition is added, so that a slot that meets the first condition cannot be used to transmit a multi-slot PDSCH, thereby avoiding a problem that transmission performance may deteriorate or normal communication may fail because a multi-slot PDSCH is transmitted across a non-SBFD symbol and an SBFD symbol in one slot.

FIG. 14 is a schematic flowchart of another downlink transmission method according to this application. It should be understood that the method may be considered as a specific implementation of determining a slot set for multi-slot PDSCH transmission that is provided based on an existing physical slot counting method. The method includes the following steps.

S1410: A network device sends first signaling to a terminal device. Correspondingly, the terminal device receives the first signaling from the network device.

For example, the first signaling is DCI or RRC.

For example, the first signal is a PDSCH repetition or a PDSCH slot aggregation. For descriptions of S1410, refer to the descriptions of S1210. Details are not described herein again.

S1420: The network device determines the first slot set based on the first signaling and a first condition.

If the network device determines the first slot set by using the physical slot counting method, the first slot set is a set of slots in a second slot set other than a slot that meets the first condition. The second slot set includes N1 consecutive slots including the first reference slot and a slot after the first reference slot. The first condition includes: A first symbol set of a first slot includes a non-subband full duplex SBFD symbol and an SBFD symbol. The non-SBFD symbol includes at least one of a flexible symbol or a downlink symbol, and the first slot is a slot traversed forward from the first reference slot. It should be understood that a first symbol set of any slot (for example, the first slot) is determined based on the third indication information and the fourth indication information, and the first symbol set includes L consecutive symbols. Specifically, if the third indication information indicates a start symbol P, the first symbol set of the first slot is a symbol set of L consecutive symbols with the symbol P as a start symbol in the first slot.

For specific descriptions of the first condition, refer to the descriptions in S1220. Details are not described herein again.

With reference to FIG. 13, the following uses an example to describe how to determine the first slot set based on the first condition. For example, N1 indicated by the first indication information is equal to 5, the first reference slot indicated by the second indication information is a slot #1 in the figure, the third indication information indicates a 5^{th} symbol in the first slot, and L indicated by the fourth indication information is equal to 6. In the figure, X represents an SBFD symbol, D represents a downlink symbol, and S represents a flexible symbol.

The network device determines that the second slot set includes a slot #1 to a slot #5. Specifically, if a first symbol set of the slot #1 does not meet the first condition, the slot #1 is included in the first slot set; if a first symbol set of the slot #2 meets the first condition, the slot #2 is not included in the first slot set; if a first symbol set of the slot #3 does not meet the first condition, the slot #3 is included in the first slot set; if a first symbol set of the slot #4 meets the first condition, the slot #4 is not included in the first slot set; and if a first symbol set of the slot #5 does not meet the first condition, the slot #5 is included in the first slot set. Finally, it is determined that the first slot set includes the slot #1, the slot #3, and the slot #5 in the figure.

S1430: The network device sends the first signal to the terminal device on a first symbol set corresponding to each slot in the first slot set. Correspondingly, the terminal device receives the first signal from the network device on the first symbol set corresponding to each slot.

It should be understood that the terminal device and the network device determine the first slot set according to a same method. For a specific determining process, refer to the foregoing descriptions. Details are not described herein again.

For beneficial effects of this embodiment, refer to the descriptions in the embodiment corresponding to FIG. 12. Details are not described herein again.

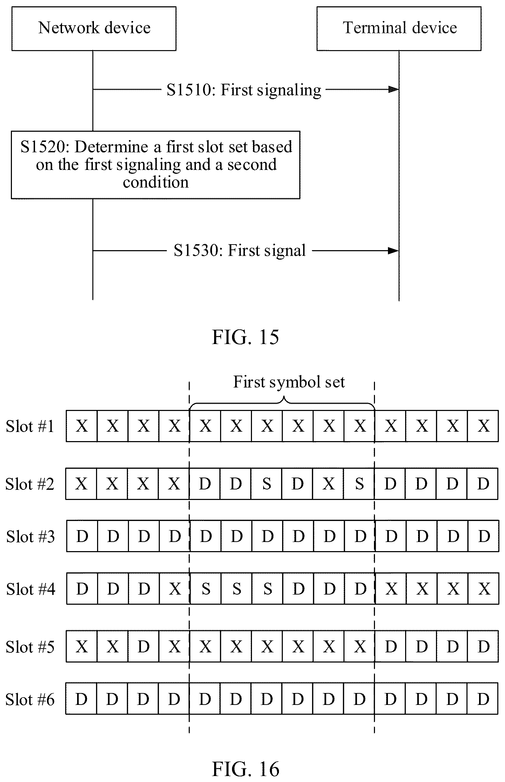

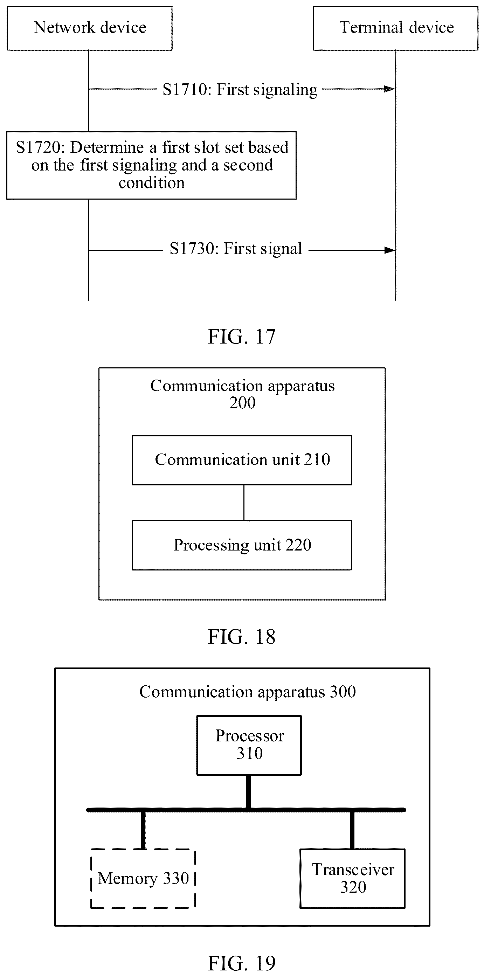

In addition, this application further provides another multi-slot PDSCH transmission solution. The following describes in detail an implementation process of the solution with reference to FIG. 15 and FIG. 17.

FIG. 15 is a schematic flowchart of another downlink transmission method according to this application. It should be understood that the method may be considered as a specific implementation of determining a slot set for multi-slot PDSCH transmission that is provided based on an existing available slot counting method. The method includes the following steps.

S1510: A network device sends first signaling to a terminal device. Correspondingly, the terminal device receives the first signaling from the network device.

For example, the first signaling is DCI or RRC.

For example, the first signal is a PDSCH repetition or a PDSCH slot aggregation. For descriptions of S1510, refer to the descriptions of S1210. Details are not described herein again.

S 1520: The network device determines the first slot set based on the first signaling and a second condition.

Because the network device determines the first slot set by using the available slot counting method, the first slot set is a set of N1 slots that start from the first reference slot and are closest to the first reference slot and that do not meet the second condition. The second condition includes: A symbol type of at least one symbol in a first symbol set of a first slot is different from a first symbol type. The first symbol type is non-subband full duplex SBFD symbol or SBFD symbol, the non-SBFD symbol includes at least one of a flexible symbol or a downlink symbol, and the first slot is a slot traversed forward from the first reference time unit. It should be understood that a first symbol set of any slot (for example, the first slot) is determined based on the third indication information and the fourth indication information, and the first symbol set includes L consecutive symbols. Specifically, if the third indication information indicates a start symbol P, the first symbol set of the first slot is a symbol set of L consecutive symbols with the symbol P as a start symbol in the first slot.

That the first slot meets the second condition may be understood as follows: When the first symbol type is SBFD symbol, it is considered that the first slot meets the second condition, provided that a symbol in the first symbol set of the first slot is a non-SBFD symbol. For example, each first slot in which a first symbol set is XXXSX, XXXXD, and XXXSD is a first slot that meets the second condition. When the first symbol type is non-SBFD symbol, it is considered that the first slot meets the second condition, provided that a symbol in the first symbol set of the first slot is an SBFD symbol. For example, each first slot in which a first symbol set is DXDSD, DDDXS, and XXXDD is a first slot that meets the second condition. It should be understood that in the foregoing example, D represents a downlink symbol, S represents a flexible symbol, and X represents an SBFD symbol.

That the first slot does not meet the second condition may be understood as follows: When the first symbol type is SBFD symbol, if all symbols in the first symbol set of the first slot are SBFD symbols, it is considered that the first slot does not meet the second condition. When the first symbol type is non-SBFD symbol, and all symbols in the first symbol set of the first slot are flexible symbols, or all symbols in the first symbol set of the first slot are downlink symbols, or some symbols in the first symbol set of the first slot are flexible symbols and all remaining symbols are downlink symbols, it is considered that the first slot does not meet the second condition in all the foregoing three cases.

Optionally, any symbol in a first symbol set of the first reference slot is at least one symbol in a non-SBFD symbol, and the first symbol type is non-SBFD symbol. For example, if all symbols in the first symbol set of the first slot are flexible symbols, or all symbols in the first symbol set of the first slot are downlink symbols, or some symbols in the first symbol set of the first slot are flexible symbols and all remaining symbols are downlink symbols, it is considered that the first symbol type is non-SBFD symbol.

Optionally, any symbol in a first symbol set of the first reference slot is an SBFD symbol, and the first symbol type is SBFD symbol.

Optionally, when a first symbol set of the first reference slot includes an uplink symbol, or when a first symbol set of the first reference slot includes an SBFD symbol and a non-SBFD symbol, the first symbol type is determined based on a second slot. The second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol. The following provides descriptions by using an example.

For example, if first symbol sets of the first reference slot and a 1^{st} slot, a 2^{nd} slot, and a 3^{rd} slot after the first reference slot are respectively UUUUU, UUUDU, XXDDD, and DDSDD, the second slot is the 3^{rd} slot after the first reference slot. Because all symbols in the first symbol set of the 3^{rd} slot after the first reference slot are non-SBFD symbols (DDSDD), the first symbol type is non-SBFD symbol. It should be understood that in the foregoing example, U represents an uplink symbol, D represents a downlink symbol, S represents a flexible symbol, and X represents an SBFD symbol.

For example, if first symbol sets of the first reference slot and a 1^{st} slot, a 2^{nd} slot, and a 3^{rd} slot after the first reference slot are respectively UUUUU, UUUDU, XXXXX, and XXDDD, the second slot is the 2^{nd} slot after the first reference slot. Because all symbols in the first symbol set of the 2^{nd} slot after the first reference slot are SBFD symbols (XXXXX), the first symbol type is SBFD symbol. It should be understood that in the foregoing example, U represents an uplink symbol, D represents a downlink symbol, and X represents an SBFD symbol. Optionally, the first symbol type is indicated by the first signaling. In an implementation, a column is added to a TDRA table, values of the column are all candidate values of the first symbol type, the first signaling indicates a row in the TDRA table, and a value of the newly added column corresponding to the row indicated by the first signaling indicates the first symbol type. For example, in the newly added column, a value 0 indicates an SBFD symbol, a value 1 indicates a non-SBFD symbol, and vice versa. For example, an N^{th} column is added to the TDRA table, and the first signaling indicates an M^{th} row. In this case, a value in the M^{th} row and the N^{th} column is the first symbol type.

Optionally, the first signaling further includes a first frequency range, and the first frequency range is a frequency range for sending the first signal; and if the first frequency range is not completely included in a frequency range of a downlink subband of an SBFD symbol, the first symbol type is non-SBFD symbol; or if the first frequency range is completely included in a frequency range of a downlink subband of an SBFD symbol, the first symbol type is SBFD symbol.

With reference to FIG. 16, the following uses an example to describe how to determine the first slot set based on the second condition. For example, N1 indicated by the first indication information is equal to 2, the first reference slot indicated by the second indication information is a slot #1 in the figure, the third indication information indicates a 5^{th} symbol in the first slot, and L indicated by the fourth indication information is equal to 6. In the figure, X represents an SBFD symbol, D represents a downlink symbol, and S represents a flexible symbol.

For example, when the first symbol type is SBFD symbol, the network device traverses each slot forward from the slot #1 based on the second condition, and determines whether a currently traversed slot can be included in the first slot set. Specifically, if all symbols in a first symbol set of the slot #1 are SBFD symbols and do not meet the second condition, the slot #1 is included in the first slot set; if a first symbol set of a slot #2 includes a downlink symbol and a flexible symbol and meets the second condition, the slot #2 is not included in the first slot set; if a first symbol set of a slot #3 meets the second condition, the slot #3 is not included in the first slot set; if a first symbol set of a slot #4 meets the second condition, the slot #4 is not included in the first slot set; and if a first symbol set of a slot #5 does not meet the second condition, the slot #5 is included in the first slot set. In this case, the quantity of slots in the first slot set meets N1=2, and the terminal device no longer traverses a slot #6 forward, and finally determines that the first slot includes the slot #1 and the slot #5 in the figure.

For example, when the first symbol type is non-SBFD symbol, the network device traverses each slot forward from the slot #1 based on the second condition, and determines whether a currently traversed slot can be included in the first slot set. Specifically, if all symbols in a first symbol set of the slot #1 are SBFD symbols and meet the second condition, the slot #1 is not included in the first slot set; if a first symbol set of a slot #2 includes an SBFD symbol and meets the second condition, the slot #2 is not included in the first slot set; if all symbols in a first symbol set of a slot #3 are downlink symbols and do not meet the second condition, the slot #3 is included in the first slot set; and if a first symbol set of a slot #4 does not meet the second condition, the slot #4 is included in the first slot set. In this case, the quantity of slots in the first slot set meets N1=2, and the terminal device no longer traverses a slot #5 forward, and finally determines that the first slot includes the slot #3 and the slot #4 in the figure.

S1530: The network device sends the first signal to the terminal device on a first symbol set corresponding to each slot in the first slot set. Correspondingly, the terminal device receives the first signal from the network device on the first symbol set corresponding to each slot.

It should be understood that the terminal device and the network device determine the first slot set according to a same method. A specific determining process is not described herein again.

In the foregoing technical solution, the second condition is added, so that a slot that meets the second condition cannot be used to transmit a multi-slot PDSCH, thereby avoiding a problem that transmission performance may deteriorate or normal communication may fail because a multi-slot PDSCH is transmitted across a non-SBFD symbol and an SBFD symbol in one slot.

FIG. 17 is a schematic flowchart of another downlink transmission method according to this application. It should be understood that the method may be considered as a specific implementation of determining a slot set for multi-slot PDSCH transmission that is provided based on an existing physical slot counting method. The method includes the following steps.

S1710: A network device sends first signaling to a terminal device. Correspondingly, the terminal device receives the first signaling from the network device.

For example, the first signaling is DCI or RRC.

For example, the first signal is a PDSCH repetition or a PDSCH slot aggregation. For descriptions of S1710, refer to the descriptions of S1210. Details are not described herein again.

S1720: The terminal device determines the first slot set based on the first signaling and a second condition.

If the terminal device determines the first slot set by using the physical slot counting method, the first slot set is a set of slots in a second slot set other than a slot that meets the second condition. The second slot set includes N1 consecutive slots including the first reference slot and a slot after the first reference slot. For specific descriptions of the second condition, refer to the descriptions in S1520. Details are not described herein again.

For how to determine the first symbol type, refer to the descriptions of the first symbol type in S1520. Details are not described herein again.

With reference to FIG. 16, the following uses an example to describe how to determine the first slot set based on the second condition. For example, N1 indicated by the first indication information is equal to 6, the first reference slot indicated by the second indication information is a slot #1 in the figure, the third indication information indicates a 5^{th} symbol in the first slot, and L indicated by the fourth indication information is equal to 6. In the figure, X represents an SBFD symbol, D represents a downlink symbol, and S represents a flexible symbol.

For example, the first symbol type is SBFD symbol. Specifically, the network device determines that the second slot set includes the slot #1 to a slot #6. If all symbols in a first symbol set of the slot #1 are SBFD symbols and do not meet the second condition, the slot #1 is included in the first slot set; if a first symbol set of the slot #2 includes a downlink symbol and a flexible symbol and meets the second condition, the slot #2 is not included in the first slot set; if a first symbol set of the slot #3 meets the second condition, the slot #3 is not included in the first slot set; if a first symbol set of the slot #4 meets the second condition, the slot #4 is not included in the first slot set; if a first symbol set of the slot #5 does not meet the second condition, the slot #5 is included in the first slot set; and if a first symbol set of the slot #6 meets the second condition, the slot #6 is not included in the first slot set. Finally, it is determined that the first slot set includes the slot #1 and the slot #5 in the figure.

For example, the first symbol type is non-SBFD symbol. Specifically, the network device determines that the second slot set includes the slot #1 to a slot #6. If all symbols in a first symbol set of the slot #1 are SBFD symbols and meet the second condition, the slot #1 is not included in the first slot set; if a first symbol set of the slot #2 includes an SBFD symbol and meets the second condition, the slot #2 is not included in the first slot set; if all symbols in a first symbol set of the slot #3 are downlink symbols and do not meet the second condition, the slot #3 is included in the first slot set; if a first symbol set of the slot #4 does not meet the second condition, the slot #4 is included in the first slot set; if a first symbol set of the slot #5 meets the second condition, the slot #5 is not included in the first slot set; and if a first symbol set of the slot #6 does not meet the second condition, the slot #6 is included in the first slot set. Finally, it is determined that the first slot set includes the slot #3, the slot #4, and the slot #6 in the figure.

S1730: The network device sends the first signal to the terminal device on a first symbol set corresponding to each slot in the first slot set. Correspondingly, the terminal device receives the first signal from the network device on the first symbol set corresponding to each slot.

It should be understood that the terminal device and the network device determine the first slot set according to a same method. A specific determining process is not described herein again.

For beneficial effects of this embodiment, refer to the descriptions in the embodiment corresponding to FIG. 15. Details are not described herein again.

It should be understood that sequence numbers of the foregoing processes do not mean a sequence of execution. The sequence of execution of the processes should be determined according to functions and internal logic of the processes, and should not constitute any limitation on an implementation process of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (such as the terminal device or the network device) may also be implemented by a component (such as a chip or a circuit) of the device.

The method provided in embodiments of this application is described in detail above with reference to FIG. 1 to FIG. 17. The foregoing method is mainly described from a perspective of interaction between the terminal device and the network device. It may be understood that, to implement the foregoing functions, the terminal device and the network device include corresponding hardware structures and/or software modules for performing the functions.

A person skilled in the art should be aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The communication apparatus provided in embodiments of this application is described below in detail with reference to FIG. 18 and FIG. 19. It should be understood that descriptions of apparatus embodiments correspond to the descriptions of the method embodiments. Therefore, for content that is not described in detail, refer to the foregoing method embodiments. For brevity, some content is not described again. In embodiments of this application, the terminal device or the network device may be divided into functional modules based on the foregoing method examples. For example, the functional modules may be obtained through division in a one-to-one correspondence with the functions, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner. An example in which each functional module is obtained through division based on each corresponding function is used below for description.

The foregoing describes in detail the data transmission method provided in this application, and the following describes the communication apparatus provided in this application. In a possible implementation, the apparatus is configured to implement the steps or procedures corresponding to the network device in the foregoing method embodiments. In another possible implementation, the apparatus is configured to implement the steps or procedures corresponding to the terminal device in the foregoing method embodiments.

FIG. 18 is a block diagram of a communication apparatus 200 according to an embodiment of this application. As shown in FIG. 18, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement the steps or procedures performed by the terminal device in the foregoing method embodiments. The processing unit 220 is configured to perform processing-related operations of the terminal device in the foregoing method embodiments, and the communication unit 210 is configured to perform sending-related operations of the terminal device in the foregoing method embodiments.

In another possible design, the apparatus 200 may implement the steps or procedures performed by the network device in the foregoing method embodiments. The communication unit 210 is configured to perform receiving-related operations of the network device in the foregoing method embodiments, and the processing unit 220 is configured to perform processing-related operations of the network device in the foregoing method embodiments.

It should be understood that the apparatus 200 herein is embodied in a form of a functional unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 200 may be specifically the terminal device in the foregoing embodiments, and may be configured to perform procedures and/or steps corresponding to the terminal device in the foregoing method embodiments; or the apparatus 200 may be specifically the network device in the foregoing embodiments, and may be configured to perform procedures and/or steps corresponding to the network device in the foregoing method embodiments. To avoid repetition, details are not described herein again.

The apparatus 200 in each of the foregoing solutions has functions of implementing the corresponding steps performed by the terminal device in the foregoing methods, or the apparatus 200 in each of the foregoing solutions has functions of implementing the corresponding steps performed by the network device in the foregoing methods. The function may be implemented by using hardware, or may be implemented by using hardware executing corresponding software. The hardware or software includes one or more modules corresponding to the foregoing function. For example, the communication unit may be replaced with a transceiver (for example, a sending unit in the communication unit may be replaced with a transmitter, and a receiving unit in the communication unit may be replaced with a receiver), and another unit such as the processing unit may be replaced with a processor, to separately perform sending and receiving operations and related processing operations in the method embodiments.

In addition, the communication unit may alternatively be a transceiver circuit (for example, the transceiver circuit may include a receiver circuit and a transmitter circuit), and the processing unit may be a processing circuit. In embodiments of this application, the apparatus in FIG. 18 may be the AP or the STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 19 is a block diagram of a communication apparatus 300 according to an embodiment of this application. The apparatus 300 includes a processor 310 and a transceiver 320. The processor 310 and the transceiver 320 communicate with each other through an internal connection path. The processor 310 is configured to execute instructions, to control the transceiver 320 to send a signal and/or receive a signal.

Optionally, the apparatus 300 may further include a memory 330. The memory 330 communicates with the processor 310 and the transceiver 320 through the internal connection path. The memory 330 is configured to store the instructions. The processor 310 may execute the instructions stored in the memory 330. In a possible implementation, the apparatus 300 is configured to implement the procedures and steps corresponding to the terminal device in the foregoing method embodiments. In another possible implementation, the apparatus 300 is configured to implement the procedures and steps corresponding to the network device in the foregoing method embodiments.

It should be understood that the apparatus 300 may be specifically the terminal device or the network device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the terminal device or the network device in the foregoing method embodiments. Optionally, the memory 330 may include a read-only memory and a random access memory, and provides instructions and data for the processor. A part of the memory may further include a nonvolatile random access memory. For example, the memory may further store information about a device type. The processor 310 may be configured to execute the instructions stored in the memory. When the processor 310 executes the instructions stored in the memory, the processor 310 is configured to perform the steps and/or procedures in the foregoing method embodiments corresponding to the terminal device or the network device.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logical device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

In addition, this application further provides a computer-readable storage medium. The computer-readable storage medium stores computer instructions, and when the computer instructions are run on a computer, operations and/or procedures performed by the terminal device or the network device in the method embodiments of this application are performed.

This application further provides a computer program product. The computer program product includes computer program code or instructions. When the computer program code or the instructions are run on a computer, operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that an operation and/or processing performed by the terminal device or the network device in any method embodiment are/is performed.

Further, the chip may include a communication interface. The communication interface may be an input/output interface, an interface circuit, or the like. Further, the chip may include the memory.

In addition, this application further provides a communication system. The communication system includes the terminal device and the network device in embodiments of this application.

It should be further noted that the memory described in this specification aims to include but is not limited to these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application. It may be clearly understood by a person skilled in the art that, for convenience and brevity of description, for a specific working process of the foregoing described system, apparatus, and unit, refer to a corresponding process in the foregoing method embodiments, and details are not described herein again. In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form. The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments. In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. Further, these specific features, structures, or characteristics may be combined in one or more embodiments in any suitable manner.

It should be further understood that ordinal numbers such as "first" and "second" mentioned in embodiments of this application are used to distinguish between a plurality of objects, and are not used to limit sizes, content, a sequence, a time sequence, priorities, importance degrees, or the like of the plurality of objects. For example, first information and second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one of items (pieces)" or a similar expression thereof refers to one item (piece) or a plurality of items (pieces), that is, any combination of these items, including any combination of singular items (pieces) or plural items (pieces). For example, at least one of a, b, or c may represent a, b, c, a and b, a and c, b and c, or a, b, and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B, B, B and B, B, B and C, C and C; C, C and C, and other combinations of A, B, and C. The foregoing uses three elements A, B, and C as an example to describe an optional case of the item. When an expression is "an item includes at least one of the following: A, B, ..., and X", that is, when more elements are included in the expression, a case to which the item is applicable may also be obtained according to the foregoing rule.

It should be further understood that the term "and/or" in this specification describes only an association relationship between associated objects, and represents that three relationships may exist. For example, A and/or B may represent the following cases: A exists alone, both A and B are included, and B exists alone, where A and B may be singular or plural. The character "/" generally indicates an "or" relationship between associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based on only A. B may alternatively be determined based on A and/or other information.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. An uplink transmission method, comprising:
receiving, by a terminal device, first signaling from a network device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH;
determining, by the terminal device, the first slot set, wherein the first slot set is a set of N1 slots that start from the first reference slot and are closest to the first reference slot and that do not meet a first condition, and the first condition comprises:
a first symbol set of a first slot comprises a non-subband full duplex SBFD symbol and an SBFD symbol, wherein
the non-SBFD symbol comprises at least one of a flexible symbol or an uplink symbol, the first slot is a slot traversed forward from the first reference slot, the first symbol set of the first slot is determined based on the third indication information and the fourth indication information, and the first symbol set comprises L consecutive symbols; and
sending, by the terminal device, the first signal to the network device on a first symbol set corresponding to each slot in the first slot set.

2. An uplink transmission method, comprising:
receiving, by a terminal device, first signaling from a network device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH;
determining, by the terminal device, the first slot set, wherein the first slot set is a set of slots in a second slot set other than a slot that meets a first condition, the second slot set comprises N1 consecutive slots comprising the first reference slot and a subsequent slot, and the first condition comprises:
a first symbol set of a first slot comprises a non-subband full duplex SBFD symbol and an SBFD symbol, wherein
the non-SBFD symbol comprises at least one of a flexible symbol or an uplink symbol, the first slot is a slot traversed forward from the first reference slot, the first symbol set of the first slot is determined based on the third indication information and the fourth indication information, and the first symbol set comprises L consecutive symbols; and
sending, by the terminal device, the first signal to the network device on a first symbol set corresponding to each slot in the first slot set.

3. The method according to claim 1 or 2, wherein the method further comprises:
receiving, by the terminal device, first information from the network device, wherein the first information indicates that simultaneous transmission on a non-SBFD symbol and an SBFD symbol in one slot is not supported.

4. The method according to claim 1 or 2, wherein the method further comprises:
receiving, by the terminal device, second information from the network device, wherein the second information comprises a first parameter, a second parameter, and a third parameter, the first parameter indicates whether the network device needs to switch an antenna panel, the second parameter indicates whether the network device needs to switch a filter, and the third parameter indicates whether the network device indicates the terminal device to perform timing advance TA adjustment; and
when an operation indicated by at least one of the first parameter, the second parameter, and the third parameter needs to be performed, determining, by the terminal device, that the network device does not support simultaneous transmission on a non-SBFD symbol and an SBFD symbol in one slot.

5. An uplink transmission method, comprising:
sending, by a network device, first signaling to a terminal device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH;
determining, by the network device, the first slot set, wherein the first slot set is a set of N1 slots that start from the first reference slot and are closest to the first reference slot and that do not meet a first condition, and the first condition comprises:
a first symbol set of a first slot comprises a non-subband full duplex SBFD symbol and an SBFD symbol, wherein
the non-SBFD symbol comprises at least one of a flexible symbol or an uplink symbol, the first slot is a slot traversed forward from the first reference slot, the first symbol set of the first slot is determined based on the third indication information and the fourth indication information, and the first symbol set comprises L consecutive symbols; and
receiving, by the network device, the first signal from the terminal device on a first symbol set corresponding to each slot in the first slot set.

6. An uplink transmission method, comprising:
sending, by a network device, first signaling to a terminal device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH;
determining, by the network device, the first slot set, wherein the first slot set is a set of slots in a second slot set other than a slot that meets a first condition, the second slot set comprises N1 consecutive slots comprising the first reference slot and a subsequent slot, and the first condition comprises:
a first symbol set of a first slot comprises a non-subband full duplex SBFD symbol and an SBFD symbol, wherein
the non-SBFD symbol comprises at least one of a flexible symbol or an uplink symbol, the first slot is a slot traversed forward from the first reference slot, the first symbol set of the first slot is determined based on the third indication information and the fourth indication information, and the first symbol set comprises L consecutive symbols; and
receiving, by the network device, the first signal from the terminal device on a first symbol set corresponding to each slot in the first slot set.

7. The method according to claim 5 or 6, wherein the method further comprises:
sending, by the network device, first information to the terminal device, wherein the first information indicates that simultaneous transmission on a non-SBFD symbol and an SBFD symbol in one slot is not supported.

8. The method according to claim 5 or 6, wherein the method further comprises:
sending, by the network device, second information to the terminal device, wherein the second information comprises a first parameter, a second parameter, and a third parameter, the first parameter indicates whether the network device needs to switch an antenna panel, the second parameter indicates whether the network device needs to switch a filter, the third parameter indicates whether the network device indicates the terminal device to perform timing advance TA adjustment, and an operation indicated by at least one of the first parameter, the second parameter, and the third parameter needs to be performed.

9. An uplink transmission method, comprising:
receiving, by a terminal device, first signaling from a network device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH;
determining, by the terminal device, the first slot set, wherein the first slot set is a set of N1 slots that start from the first reference slot and are closest to the first reference slot and that do not meet a second condition, and the second condition comprises:
a symbol type of at least one symbol in a first symbol set of a first slot is different from a first symbol type, wherein
the first symbol type is non-subband full duplex SBFD symbol or SBFD symbol, the non-SBFD symbol comprises at least one of a flexible symbol or an uplink symbol, the first slot is a slot traversed forward from the first reference slot, a first symbol set of any slot is determined based on the third indication information and the fourth indication information, and the first symbol set comprises L consecutive symbols; and
sending, by the terminal device, the first signal to the network device on a first symbol set corresponding to each slot in the first slot set.

10. An uplink transmission method, comprising:
receiving, by a terminal device, first signaling from a network device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH;
determining, by the terminal device, the first slot set, wherein the first slot set is a set of slots in a second slot set other than a slot that meets a second condition, the second slot set comprises N1 consecutive slots comprising the first reference slot and a subsequent slot, and the second condition comprises:
a symbol type of at least one symbol in a first symbol set of a first slot is different from a first symbol type, wherein
the first symbol type is non-subband full duplex SBFD symbol or SBFD symbol, the non-SBFD symbol comprises at least one of a flexible symbol or an uplink symbol, the first slot is a slot traversed forward from the first reference slot, a first symbol set of any slot is determined based on the third indication information and the fourth indication information, and the first symbol set comprises L consecutive symbols; and
sending, by the terminal device, the first signal to the network device on a first symbol set corresponding to each slot in the first slot set.

11. The method according to claim 9 or 10, wherein
any symbol in a first symbol set of the first reference slot is a non-SBFD symbol, and the first symbol type is non-SBFD symbol; or
any symbol in a first symbol set of the first reference slot is an SBFD symbol, and the first symbol type is SBFD symbol.

12. The method according to claim 9 or 10, wherein when a first symbol set of the first reference slot comprises a downlink symbol, the first symbol type is determined based on a second slot, wherein the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

13. The method according to claim 9 or 10, wherein when a first symbol set of the first reference slot comprises an SBFD symbol and a non-SBFD symbol, the first symbol type is determined based on a second slot, wherein the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

14. The method according to claim 9 or 10, wherein the first signaling further comprises the first symbol type.

15. The method according to claim 9 or 10, wherein the first signaling further comprises a first frequency range, and the first frequency range is a frequency range for sending the first signal; and
if the first frequency range is not completely comprised in a frequency range of an uplink subband of an SBFD symbol, the first symbol type is non-SBFD symbol; or if the first frequency range is completely comprised in a frequency range of an uplink subband of an SBFD symbol, the first symbol type is SBFD symbol.

16. An uplink transmission method, comprising:
sending, by a network device, first signaling to a terminal device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH;
determining, by the network device, the first slot set, wherein the first slot set is a set of N1 slots that start from the first reference slot and are closest to the first reference slot and that do not meet a second condition, and the second condition comprises:
a symbol type of at least one symbol in a first symbol set of a first slot is different from a first symbol type, wherein
the first symbol type is non-subband full duplex SBFD symbol or SBFD symbol, the non-SBFD symbol comprises at least one of a flexible symbol or an uplink symbol, the first slot is a slot traversed forward from the first reference slot, a first symbol set of any slot is determined based on the third indication information and the fourth indication information, and the first symbol set comprises L consecutive symbols; and
receiving, by the network device, the first signal from the terminal device on a first symbol set corresponding to each slot in the first slot set.

17. An uplink transmission method, comprising:
sending, by a network device, first signaling to a terminal device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH;
determining, by the network device, the first slot set, wherein the first slot set is a set of slots in a second slot set other than a slot that meets a second condition, the second slot set comprises N1 consecutive slots comprising the first reference slot and a subsequent slot, and the second condition comprises:
a symbol type of at least one symbol in a first symbol set of a first slot is different from a first symbol type, wherein
the first symbol type is non-subband full duplex SBFD symbol or SBFD symbol, the non-SBFD symbol comprises at least one of a flexible symbol or an uplink symbol, the first slot is a slot traversed forward from the first reference slot, a first symbol set of any slot is determined based on the third indication information and the fourth indication information, and the first symbol set comprises L consecutive symbols; and
receiving, by the network device, the first signal from the terminal device on a first symbol set corresponding to each slot in the first slot set.

18. The method according to claim 16 or 17, wherein
any symbol in a first symbol set of the first reference slot is a non-SBFD symbol, and the first symbol type is non-SBFD symbol; or
any symbol in a first symbol set of the first reference slot is an SBFD symbol, and the first symbol type is SBFD symbol.

19. The method according to claim 16 or 17, wherein when a first symbol set of the first reference slot comprises a downlink symbol, the first symbol type is determined based on a second slot, wherein the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

20. The method according to claim 16 or 17, wherein when a first symbol set of the first reference slot comprises an SBFD symbol and a non-SBFD symbol, the first symbol type is determined based on a second slot, wherein the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

21. The method according to claim 16 or 17, wherein the first signaling further comprises the first symbol type.

22. The method according to claim 16 or 17, wherein the first signaling further comprises a first frequency range, and the first frequency range is a frequency range for sending the first signal; and
if the first frequency range is not completely comprised in a frequency range of an uplink subband of an SBFD symbol, the first symbol type is non-SBFD symbol; or if the first frequency range is completely comprised in a frequency range of an uplink subband of an SBFD symbol, the first symbol type is SBFD symbol.

23. A communication apparatus, comprising:
a communication unit, configured to receive first signaling from a network device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH; and
a processing unit, configured to determine the first slot set, wherein the first slot set is a set of N1 slots that start from the first reference slot and are closest to the first reference slot and that do not meet a first condition, and the first condition comprises:
a first symbol set of a first slot comprises a non-subband full duplex SBFD symbol and an SBFD symbol, wherein
the non-SBFD symbol comprises at least one of a flexible symbol or an uplink symbol, the first slot is a slot traversed forward from the first reference slot, the first symbol set of the first slot is determined based on the third indication information and the fourth indication information, and the first symbol set comprises L consecutive symbols; and
the communication unit is further configured to send the first signal to the network device on a first symbol set corresponding to each slot in the first slot set.

24. A communication apparatus, comprising:
a communication unit, configured to receive first signaling from a network device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH; and
a processing unit, configured to determine the first slot set, wherein the first slot set is a set of slots in a second slot set other than a slot that meets a first condition, the second slot set comprises N1 consecutive slots comprising the first reference slot and a subsequent slot, and the first condition comprises:
a first symbol set of a first slot comprises a non-subband full duplex SBFD symbol and an SBFD symbol, wherein
the non-SBFD symbol comprises at least one of a flexible symbol or an uplink symbol, the first slot is a slot traversed forward from the first reference slot, the first symbol set of the first slot is determined based on the third indication information and the fourth indication information, and the first symbol set comprises L consecutive symbols; and
the communication unit is further configured to send the first signal to the network device on a first symbol set corresponding to each slot in the first slot set.

25. The apparatus according to claim 23 or 24, wherein the communication unit is further configured to receive first information from the network device, wherein the first information indicates that simultaneous transmission on a non-SBFD symbol and an SBFD symbol in one slot is not supported.

26. The apparatus according to claim 23 or 24, wherein
the communication unit is further configured to receive second information from the network device, wherein the second information comprises a first parameter, a second parameter, and a third parameter, the first parameter indicates whether the network device needs to switch an antenna panel, the second parameter indicates whether the network device needs to switch a filter, and the third parameter indicates whether the network device indicates the terminal device to perform timing advance TA adjustment; and
when an operation indicated by at least one of the first parameter, the second parameter, and the third parameter needs to be performed, the processing unit is further configured to determine that the network device does not support simultaneous transmission on a non-SBFD symbol and an SBFD symbol in one slot.

27. A communication apparatus, comprising:
a communication unit, configured to send first signaling to a terminal device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH; and
a processing unit, configured to determine the first slot set, wherein the first slot set is a set of N1 slots that start from the first reference slot and are closest to the first reference slot and that do not meet a first condition, and the first condition comprises:
a first symbol set of a first slot comprises a non-subband full duplex SBFD symbol and an SBFD symbol, wherein
the non-SBFD symbol comprises at least one of a flexible symbol or an uplink symbol, the first slot is a slot traversed forward from the first reference slot, the first symbol set of the first slot is determined based on the third indication information and the fourth indication information, and the first symbol set comprises L consecutive symbols; and
the communication unit is further configured to receive the first signal from the terminal device on a first symbol set corresponding to each slot in the first slot set.

28. A communication apparatus, comprising:
a communication unit, configured to send first signaling to a terminal device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH; and
a processing unit, configured to determine the first slot set, wherein the first slot set is a set of slots in a second slot set other than a slot that meets a first condition, the second slot set comprises N1 consecutive slots comprising the first reference slot and a subsequent slot, and the first condition comprises:
a first symbol set of a first slot comprises a non-subband full duplex SBFD symbol and an SBFD symbol, wherein
the non-SBFD symbol comprises at least one of a flexible symbol or an uplink symbol, the first slot is a slot traversed forward from the first reference slot, the first symbol set of the first slot is determined based on the third indication information and the fourth indication information, and the first symbol set comprises L consecutive symbols; and
the communication unit is further configured to receive the first signal from the terminal device on a first symbol set corresponding to each slot in the first slot set.

29. The apparatus according to claim 27 or 28, wherein the communication unit is further configured to send first information to the terminal device, wherein the first information indicates that simultaneous transmission on a non-SBFD symbol and an SBFD symbol in one slot is not supported.

30. The apparatus according to claim 27 or 28, wherein the communication unit is further configured to send second information to the terminal device, wherein the second information comprises a first parameter, a second parameter, and a third parameter, the first parameter indicates whether the network device needs to switch an antenna panel, the second parameter indicates whether the network device needs to switch a filter, the third parameter indicates whether the network device indicates the terminal device to perform timing advance TA adjustment, and an operation indicated by at least one of the first parameter, the second parameter, and the third parameter needs to be performed.

31. A communication apparatus, comprising:
a communication unit, configured to receive first signaling from a network device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH; and
a processing unit, configured to determine the first slot set, wherein the first slot set is a set of N1 slots that start from the first reference slot and are closest to the first reference slot and that do not meet a second condition, and the second condition comprises:
a symbol type of at least one symbol in a first symbol set of a first slot is different from a first symbol type, wherein
the first symbol type is non-subband full duplex SBFD symbol or SBFD symbol, the non-SBFD symbol comprises at least one of a flexible symbol or an uplink symbol, the first slot is a slot traversed forward from the first reference slot, a first symbol set of any slot is determined based on the third indication information and the fourth indication information, and the first symbol set comprises L consecutive symbols; and
the communication unit is further configured to send the first signal to the network device on a first symbol set corresponding to each slot in the first slot set.

32. A communication apparatus, comprising:
a communication unit, configured to receive first signaling from a network device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH; and
a processing unit, configured to determine the first slot set, wherein the first slot set is a set of slots in a second slot set other than a slot that meets a second condition, the second slot set comprises N1 consecutive slots comprising the first reference slot and a subsequent slot, and the second condition comprises:
a symbol type of at least one symbol in a first symbol set of a first slot is different from a first symbol type, wherein
the first symbol type is non-subband full duplex SBFD symbol or SBFD symbol, the non-SBFD symbol comprises at least one of a flexible symbol or an uplink symbol, the first slot is a slot traversed forward from the first reference slott, a first symbol set of any slot is determined based on the third indication information and the fourth indication information, and the first symbol set comprises L consecutive symbols; and
the communication unit is further configured to send the first signal to the network device on a first symbol set corresponding to each slot in the first slot set.

33. The apparatus according to claim 31 or 32, wherein
any symbol in a first symbol set of the first reference slot is a non-SBFD symbol, and the first symbol type is non-SBFD symbol; or
any symbol in a first symbol set of the first reference slot is an SBFD symbol, and the first symbol type is SBFD symbol.

34. The apparatus according to claim 31 or 32, wherein when a first symbol set of the first reference slot comprises a downlink symbol, the first symbol type is determined based on a second slot, wherein the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

35. The apparatus according to claim 31 or 32, wherein when a first symbol set of the first reference slot comprises an SBFD symbol and a non-SBFD symbol, the first symbol type is determined based on a second slot, wherein the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

36. The apparatus according to claim 31 or 32, wherein the first signaling further comprises the first symbol type.

37. The apparatus according to claim 31 or 32, wherein the first signaling further comprises a first frequency range, and the first frequency range is a frequency range for sending the first signal; and
if the first frequency range is not completely comprised in a frequency range of an uplink subband of an SBFD symbol, the first symbol type is non-SBFD symbol; or if the first frequency range is completely comprised in a frequency range of an uplink subband of an SBFD symbol, the first symbol type is SBFD symbol.

38. A communication apparatus, comprising:
a communication unit, configured to send first signaling to a terminal device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH; and
a processing unit, configured to determine the first slot set, wherein the first slot set is a set of N1 slots that start from the first reference slot and are closest to the first reference slot and that do not meet a second condition, and the second condition comprises:
a symbol type of at least one symbol in a first symbol set of a first slot is different from a first symbol type, wherein
the first symbol type is non-subband full duplex SBFD symbol or SBFD symbol, the non-SBFD symbol comprises at least one of a flexible symbol or an uplink symbol, the first slot is a slot traversed forward from the first reference slot, a first symbol set of any slot is determined based on the third indication information and the fourth indication information, and the first symbol set comprises L consecutive symbols; and
the communication unit is further configured to receive the first signal from the terminal device on a first symbol set corresponding to each slot in the first slot set.

39. A communication apparatus, comprising:
a communication unit, configured to send first signaling to a terminal device, wherein the first signaling indicates the terminal device to send a first signal in a first slot set, the first signaling carries first indication information, second indication information, third indication information, and fourth indication information, the first indication information indicates a quantity N1 of slots in the first slot set, the second indication information indicates a first reference slot, the third indication information indicates a start symbol in a slot, the fourth indication information indicates a symbol length L in a slot, N1 and L are positive integers, and the first signal is carried on a first physical uplink shared channel PUSCH or a first physical uplink control channel PUCCH; and
a processing unit, configured to determine the first slot set, wherein the first slot set is a set of slots in a second slot set other than a slot that meets a second condition, the second slot set comprises N1 consecutive slots comprising the first reference slot and a subsequent slot, and the second condition comprises:
a symbol type of at least one symbol in a first symbol set of a first slot is different from a first symbol type, wherein
the first symbol type is non-subband full duplex SBFD symbol or SBFD symbol, the non-SBFD symbol comprises at least one of a flexible symbol or an uplink symbol, the first slot is a slot traversed forward from the first reference slot, a first symbol set of any slot is determined based on the third indication information and the fourth indication information, and the first symbol set comprises L consecutive symbols; and
the communication unit is configured to receive the first signal from the terminal device on a first symbol set corresponding to each slot in the first slot set.

40. The apparatus according to claim 38 or 39, wherein
any symbol in a first symbol set of the first reference slot is a non-SBFD symbol, and the first symbol type is non-SBFD symbol; or
any symbol in a first symbol set of the first reference slot is an SBFD symbol, and the first symbol type is SBFD symbol.

41. The apparatus according to claim 38 or 39, wherein when a first symbol set of the first reference slot comprises a downlink symbol, the first symbol type is determined based on a second slot, wherein the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

42. The apparatus according to claim 38 or 39, wherein when a first symbol set of the first reference slot comprises an SBFD symbol and a non-SBFD symbol, the first symbol type is determined based on a second slot, wherein the second slot is a 1^{st} slot that is after the first reference slot and in which all symbols in a first symbol set are SBFD symbols or non-SBFD symbols, and when any symbol in the first symbol set of the second slot is a non-SBFD symbol, the first symbol type is non-SBFD symbol, or when any symbol in the first symbol set of the second slot is an SBFD symbol, the first symbol type is SBFD symbol.

43. The apparatus according to claim 38 or 39, wherein the first signaling further comprises the first symbol type.

44. The apparatus according to claim 38 or 39, wherein the first signaling further comprises a first frequency range, and the first frequency range is a frequency range for sending the first signal; and
if the first frequency range is not completely comprised in a frequency range of an uplink subband of an SBFD symbol, the first symbol type is non-SBFD symbol; or if the first frequency range is completely comprised in a frequency range of an uplink subband of an SBFD symbol, the first symbol type is SBFD symbol.

45. A communication apparatus, wherein the communication apparatus comprises at least one processor and at least one memory, the at least one memory is configured to store a computer program or instructions, and the at least one processor is configured to execute the computer program or the instructions in the memory, so that the method according to any one of claims 1 to 4 is performed, or the method according to any one of claims 9 to 15 is performed, or the method according to any one of claims 5 to 8 is performed, or the method according to any one of claims 16 to 22 is performed.

46. A computer-readable storage medium, wherein the computer-readable storage medium stores computer instructions, and when the computer instructions are run on a computer, the method according to any one of claims 1 to 4 is performed, or the method according to any one of claims 9 to 15 is performed, or the method according to any one of claims 5 to 8 is performed, or the method according to any one of claims 16 to 22 is performed.

47. A computer program product, wherein the computer program product comprises computer program code, and when the computer program code is run on a computer, the method according to any one of claims 1 to 4 is performed, or the method according to any one of claims 9 to 15 is performed, or the method according to any one of claims 5 to 8 is performed, or the method according to any one of claims 16 to 22 is performed.
